# EUROPÄISCHE PATENTSCHRIFT

(11) **EP 1 784 436 B1**
(45) Veröffentlichungstag und Bekanntmachung des Hinweises auf die Patenterteilung: **20.08.2008**
(21) Anmeldenummer: 05776629.7
(22) Anmeldetag: 04.08.2005
(51) Int. Cl.: C08F 220/04, C08F 222/02, C09D 133/02

(54) **VERFAHREN ZUR HERSTELLUNG VON CARBOXYLATREICHEN COPOLYMEREN AUS MONOETHYLENISCH UNGESTÄTTIGTEN MONO- UND DICARBONSÄUREN SOWIE CARBOXYLATREICHE COPOLYMERE MIT NIEDRIGEM NEUTRALISATIONSGRAD**
METHOD FOR PRODUCING CARBOXYLATE-RICH COPOLYMERS FROM MONOETHYLENICALLY UNSATURATED MONOCARBOXYLIC AND DICARBOXYLIC ACIDS AND CARBOXYLATE-RICH COPOLYMERS HAVING A LOW NEUTRALIZATION DEGREE
PROCEDE DE PRODUCTION DE COPOLYMERES RICHES EN CARBOXYLATE A PARTIR D'ACIDES MONOCARBOXYLIQUES ET DICARBOXYLIQUES MONOETHYLENIQUEMENT INSATURES, ET COPOLYMERES RICHES EN CARBOXYLATE A DEGRE DE NEUTRALISATION BAS

(30) Priorität: 24.08.2004 DE 102004041127
(43) Veröffentlichungstag der Anmeldung: 16.05.2007
(73) Patentinhaber: BASF SE, 67056 Ludwigshafen (DE)
(72) Erfinder: MICHL, Kathrin, 67063 Ludwigshafen (DE); GERST, Matthias, 67433 Neustadt (DE); KLIPPEL, Frank, 67067 Ludwigshafen (DE); GÖTHLICH, Alexander, 68163 Mannheim (DE); DIETSCHE, Frank, 69198 Schriesheim (DE); WITTELER, Helmut, 67157 Wachenheim (DE); FAUL, Dieter, 67150 Niederkirchen (DE)
(86) Internationale Anmeldenummer: PCT/EP2005/008444
(87) Internationale Veröffentlichungsnummer: WO 2006/021308

(56) Entgegenhaltungen:
- EP-A- 0 106 110
- EP-A- 0 651 088
- US-A- 4 271 058
- US-A- 6 146 746
- US-B1- 6 299 936

## Beschreibung

Die vorliegende Erfindung betrifft die Herstellung von carboxylatreichen Copolymeren aus monoethylenisch ungesättigten Mono- und Dicarbonsäuren mit einem mittleren Molekulargewicht M_{w} von mindestens 3000 g/mol sowie mindestens 20,01 Gew. % der Dicarbonsäure durch radikalische Polymerisation in Gegenwart von 2 bis 19,9 Moläquivalenten eines organischen Amins, bezogen auf die Gesamtmenge aller COOH-Gruppen der Mono- und Dicarbonsäuren bei einer Temperatur von nicht mehr als 130°C. Die Erfindung betrifft weiterhin carboxylatreiche Copolymere mit niedrigem Neutralisationsgrad, welche durch das Verfahren erhältlich sind sowie die Verwendung derartiger Copolymere zur Behandlung von Oberflächen sowie als Bindemittel zur Faserbindung.

Copolymere aus monoethylenisch ungesättigten Mono- und Dicarbonsäuren wie beispielsweise Acrylsäure-Maleinsäure-Copolymere sowie Herstellungsverfahren für derartige Copolymere sind prinzipiell bekannt. Beispielhaft sei auf EP-A 075 820, EP-A 106 110, EP-A 451 508, DE-A 40 04 953, EP-A 279 892, EP-A 398 724, EP-A 942 015 oder WO 99/26988 verwiesen. Derartige Copolymere weisen eine im Vergleich zu Polyacrylsäuren erhöhte COOH-Dichte auf und werden für verschiedenste Anwendungszwecke eingesetzt, beispielsweise als Inkrustierungsinhibitoren, als Bestandteile von Wasch- und Reinigungsmitteln oder als Absorber für Flüssigkeiten.

Die Verwendung derartiger Polymere als Bestandteile von Mitteln zur Oberflächenbehandlung von Metallen ist in der noch unveröffentlichten Anmeldung PCT/EP/04/001590 offenbart.

Weiterhin können derartige Polymere als Komponenten von Bindemitteln für die Faserbindung, beispielsweise zur Bindung von Vliesen eingesetzt werden. Dies ist beispielsweise in WO 97/31059 offenbart. Hierbei werden sie üblicherweise mit einem geeigneten Vernetzer gemischt, das Vlies mit der Formulierung behandelt und ausgehärtet. Als Vernetzer können bevorzugt Polyalkohole eingesetzt werden, die beim Erwärmen unter Veresterung mit den COOH-Gruppen des Polymers reagieren.

Monoethylenisch ungesättigte Dicarbonsäuren reagieren im Zuge der radikalischen Polymerisation üblicherweise deutlich träger als Monocarbonsäuren wie beispielsweise (Meth)acrylsäure. Dies gilt schon für Dicarbonsäuren wie Itaconsäure oder Methylenmalonsäure. Besonders reaktionsträge sind Maleinsäure, Fumarsäure und ähnliche Dicarbonsäuren, bei denen die Carboxylgruppen auf beiden Seiten der Doppelbindung angeordnet sind. Daher enthalten Copolymere aus monoethylenisch ungesättigten Mono- und Dicarbonsäuren häufig noch mehr oder weniger große Anteile von nicht einpolymerisierten Dicarbonsäuren.

Hohe Restgehalte an Dicarbonsäuren sind für viele Anwendungen unerwünscht. Sie führen bei der Verwendung der Polymere zur Faserbindung zu geringeren mechanischen Festigkeiten der gebundenen Produkte. Bei der Verwendung zur Metalloberflächenbehandlung resultiert häufig ein unerwünschter Grauschleier. Außerdem kann freie restliche Dicarbonsäure wieder ausgelaugt werden.

Theoretisch besteht die Möglichkeit der Nachreinigung der Polymere. Dies ist aber umständlich und unökonomisch.

Es ist bekannt, die COOH-Gruppen der eingesetzten Monomere im Zuge der Polymerisation ganz oder teilweise mit Basen zu neutralisieren. Hierdurch lässt sich der Anteil nicht einpolymerisierter Dicarbonsäure verringern.

EP-A 075 820 offenbart ein Verfahren zur Herstellung von Copolymeren aus 40 bis 90 Gew. % von monoethylenisch ungesättigten Monocarbonsäuren sowie 10 bis 60 Gew. % von monoethylenisch ungesättigten Dicarbonsäuren. Die Polymerisation wird in wässriger Lösung bei 60 bis 150°C durchgeführt und die COOH-Gruppen an den Monomeren sind zu 20 bis 80 % neutralisiert, z.B. mit NaOH, KOH, NH₃ oder organischen Aminen. In den Beispielen wird der Einsatz von Natronlauge beschrieben. Bei einem Neutralisationsgrad von weniger als 20% nimmt der Rest-Dicarbonsäuregehalt deutlich zu, ebenso bei einem Neutralisationsgrad von mehr als 80%. Nur im beschriebenen Fenster werden Restgehalte an Dicarbonsäuren von weniger als 1,5 Gew. % erzielt.

EP-A 106 110 und EP-A 398 724 offenbaren ein ähnliches Verfahren, bei denen der Neutralisationsgrad ebenfalls 20 bis 80 % beträgt.

EP-A 451 508 offenbart ein Verfahren zur Herstellung von Copolymeren aus ethylenisch ungesättigten Dicarbonsäuren und verschiedenen ethylenisch ungesättigten Monocarbonsäuren, bei dem man mit einem Neutralisationsgrad von 52 bis 70 % arbeitet.

WO 99/26988 offenbart ein zweistufiges Verfahren zur Herstellung von Polymeren aus Acrylsäure und Acrylsäurederivaten, insbesondere Acrylamiden, bei dem man in einer ersten Stufe die Polymerisation vornimmt und in einer zweiten Stufe durch Nachreaktion bei 120 bis 240°C, bevorzugt 140 bis 180°C den Restmonomergehalt verringert. Der Neutralisationsgrad der Monomere liegt bei 10 bis 100%. Als Basen werden NH₃ sowie organische Amine vorgeschlagen. Acrylsäure-Maleinsäurecopolymere sind nicht offenbart.

EP-A 942 015 offenbart eine Polymerzusammensetzung, welche ein (Meth)acrylsäure-Maleinsäure-Copolymeres enthält. Das Copolymere besitzt die Eigenschaft, Ton zu dispergieren. In den Beispielen wird die Herstellung eines Copolymers mit einem Gehalt von 15,2 Gew. % Maleinsäure in Gegenwart von NaOH als Base und Neutralisationsgraden von 12,5, 25 und 50% beschrieben. Nach der Herstellung wird das (Co)Polymer vollständig neutralisiert.

Die geschilderten Techniken mit einem mehr oder weniger großen Grad von Neutralisation führen zu Copolymeren, welche ihrerseits ganz oder zumindest teilweise neutralisiert sind. Für viele Anwendungen sind aber Polymere mit einem möglichst hohen Anteil an nicht neutralisierten COOH-Gruppen erwünscht. Um eine möglichst hohe COOH-Gruppen-Dichte zu erhalten, ist weiterhin ein möglichst hoher Anteil von Dicarbonsäure erwünscht.

Der oben zitierte Stand der Technik zeigt jedoch, dass bei einer Zurücknahme des Neutralisationsgrades unter 20 % der Anteil nicht polymerisierter Dicarbonsäure im Produkt ansteigt. Naturgemäß wird die Problematik des Restanteils an unpolymerisierter Dicarbonsäure im Polymer umso größer, je höher der Anteil an eingesetzter Dicarbonsäure ist.

Im Prinzip besteht die Möglichkeit, durch Erhöhung der Polymerisationstemperatur, das Einpolymerisieren der Dicarbonsäure zu verbessern, und die Restanteile nicht polymerisierter Dicarbonsäure zu verringern. Dies ist beispielsweise in EP-A 075 820 in den Beispielen 1 und 7 gezeigt. Die Beispiele zeigen aber auch, dass mit der Temperaturerhöhung eine sehr deutliche Herabsetzung des Molekulargewichtes des Copolymers verbunden ist.

Aufgabe der Erfindung war es, ein Verfahren zur Herstellung von Copolymeren aus ethylenisch ungesättigten Monocarbonsäuren und reaktionsträgen ethylenisch ungesättigten Dicarbonsäuren bereit zu stellen, welche mehr als 20 Gew. % der Dicarbonsäure enthalten, aber dennoch einen niedrigen Neutralisationsgrad von weniger als 20 % und einen niedrigen Restgehalt an monomerer Dicarbonsäure sowie weiterhin ein mittleres Molekulargewicht M_{w} von mindestens 3000 g/mol aufweisen.

Dementsprechend wurde ein Verfahren zur Herstellung von carboxylatreichen Copolymeren aus monoethylenisch ungesättigten Mono- und Dicarbonsäuren mit einem mittleren Molekulargewicht M_{w} von mindestens 3000 g/mol durch radikalische Polymerisation in wässriger Lösung gefunden, wobei man die folgenden Monomere zur Polymerisation einsetzt:
(A) 30 bis 79,99 Gew. % mindestens einer ethylenisch ungesättigten Monocarbonsäure,
(B) 20,01 bis 70 Gew. % mindestens einer ethylenisch ungesättigten Dicarbonsäure der allgemeinen Formel

   (HOOC)R¹C=CR²(COOH) (I),

   und/oder

   R¹R²C=C(-(CH₂)ₙ-COOH)(COOH) (II),

   oder der entsprechenden Carbonsäureanhydride und/oder anderer hydrolysierbarer Derivate, wobei R¹ und R² unabhängig voneinander für H oder einen geradkettigen oder verzweigten, optional substituierten Alkylrest mit 1 bis 20 C-Atomen stehen, oder im Falle von (I) R¹ und R² gemeinsam für einen optional substituierten Alkylenrest mit 3 bis 20 C-Atomen stehen, und n für eine ganze Zahl von 0 bis 5 steht,
   sowie
(C) 0 bis 40 Gew. % mindestens eines weiteren -von (A) und (B) verschiedenenethylenisch ungesättigten Comonomers,
   wobei die Mengen jeweils auf die Gesamtmenge aller eingesetzten Monomere bezogen ist,
und wobei man die Polymerisation in Gegenwart von 3 bis 16 mol % mindestens eines Amins, bezogen auf die Gesamtmenge aller COOH-Gruppen der Mono- und Di-carbonsäuren, bei einer Temperatur von 80°C bis weniger als 130°C vornimmt.

Es wurden carboxylatreiche Copolymere mit einem mittleren Molekulargewicht M_{w} von mindestens 3000 g/mol gefunden, welche als Monomereinheiten
(A) 30 bis 79,99 Gew. % monoethylenisch ungesättigte Monocarbonsäuren,
(B) 20,01 bis 70 Gew. % monoethylenisch ungesättigte Dicarbonsäuren der allgemeinen Formel

   (HOOC)R¹C=CR²(COOH) (I),

   und/oder

   R¹R²C=C(-(CH₂)ₙ-COOH)(COOH) (II),

   wobei R¹ und R² unabhängig voneinander für H oder einen geradkettigen oder verzweigten, optional substituierten Alkylrest mit 1 bis 20 C-Atomen stehen, oder im Falle von (I) R¹ und R² gemeinsam für einen optional substituierten Alkylenrest mit 3 bis 20 C-Atomen stehen, und n für eine ganze Zahl von 0 bis 5 steht, sowie
(C) 0 bis 40 Gew. % weiterer, ethylenisch ungesättigter Comonomere enthalten,
und durch das geschilderte Verfahren erhältlich sind.

Es wurde die Verwendung derartiger Copolymerer zur Behandlung Oberflächen gefunden. Sie eignen sich besonders zur Behandlung von metallischen Oberflächen, insbesondere zur Passivierung von Metallen und ganz besonders zum Passivieren von Zink, Aluminium und verzinkten und aluminierten Oberflächen

Die Copolymere eignen sich weiterhin als Bindemittel für faserige oder körnige Substrate.

Überraschenderweise wurde gefunden, dass durch die Verwendung der geschilderten Mengen von Aminen als Base Copolymere erhältlich sind, welche einen niedrigen Neutralisationsgrad aufweisen aber dennoch einen ebenfalls niedrigen Restanteil von unpolymerisierter Dicarbonsäure aufweisen. Dies war auch deswegen überraschend, weil die Verwendung von Ammoniak keine vorteilhaften Ergebnisse ergibt. Es lassen sich Copolymere mit einem sehr hohen Anteil von einpolymerisierten Dicarbonsäuren erhalten, welche dennoch ein vergleichsweise hohes Molekulargewicht aufweisen.

Die Polymere weisen deutlich verbesserte Anwendungseigenschaften auf.

Bei der Verwendung zur Passivierung von Metallen lässt sich ein deutlich besserer Korrosionsschutz erreichen als bei der Verwendung von Copolymeren mit höherem Neutralisationsgrad, welche unter Verwendung anderer Basen hergestellt wurden.
Bei der Verwendung als Bindemittel für faserige oder körnige Substrate wird eine höhere Bindekraft erhalten und ein verminderter Auswaschverlust erreicht.

Zu der Erfindung ist im Einzelnen das Folgende auszuführen.
Für das erfindungsgemäße Verfahren werden die Monomere (A) und (B) eingesetzt. Optional können weiterhin von (A) und (B) verschiedene Monomere (C) eingesetzt werden.

Bei dem Monomer (A) handelt es sich um mindestens eine monoethylenisch ungesättigte Monocarbonsäure. Es können selbstverständlich auch Gemische mehrerer verschiedener ethylenisch ungesättigten Monocarbonsäuren eingesetzt werden.

Beispiele geeigneter monoethylenisch ungesättigter Monocarbonsäuren (A) umfassen Acrylsäure, Methacrylsäure, Crotonsäure, Vinylessigsäure oder auch C₁ - C₄ Halbester monoethylenisch ungesättigter Dicarbonsäuren. Bei bevorzugten Monomeren handelt es sich um Acrylsäure und Methacrylsäure, besonders bevorzugt ist Acrylsäure.

Es werden 30 bis 79,99 Gew. % des Monomers (A) eingesetzt, insbesondere 30 bis 79,9 Gew. %, wobei die Mengenangabe auf die Gesamtmenge aller für das Verfahren eingesetzten Monomere bezogen ist. Bevorzugt werden 40 bis 78 Gew. % des Monomers (A), besonders bevorzugt 45 bis 77 Gew. % und ganz besonders bevorzugt 55 bis 76 Gew. % eingesetzt.

Bei dem Monomer (B) handelt es sich um mindestens eine monoethylenisch ungesättigte Dicarbonsäure der allgemeinen Formel (HOOC)R¹C=CR²(COOH) (I) und/oder R¹R²C=C(-(CH₂)ₙ-COOH)(COOH) (II).

Es können auch Gemische mehrerer verschiedener Monomere (B) eingesetzt werden. Im Falle von (I) kann es sich jeweils um die cis und/oder die trans-Form des Monomers handeln. Die Monomere können auch in Form der entsprechenden Carbonsäureanhydride oder anderer hydrolysierbarer Carbonsäurederivate eingesetzt werden. Sofern die COOH-Gruppen in cis-Form angeordnet sind, können besonders vorteilhaft cyclische Anhydride eingesetzt werden.

Bei R¹ und R² handelt es sich unabhängig voneinander um H oder einen geradkettigen oder verzweigten, optional substituierten Alkylrest mit 1 bis 20 C-Atomen. Bevorzugt weist der Alkylrest 1 bis 4 C-Atome auf. Besonders bevorzugt handelt es sich bei R¹ bzw. R² um H und/oder eine Methylgruppe. Der Alkylrest kann auch optional noch weitere Substituenten aufweisen, vorausgesetzt diese haben keinen negativen Einfluss auf die Anwendungseigenschaften des Polymers oder des Verfahrens.
Im Falle der Formel (I) können R¹ und R² weiterhin gemeinsam für einen Alkylenrest mit 3 bis 20 C-Atomen stehen, der auch optional noch weiter substituiert sein kann. Bevorzugt umfasst der aus der Doppelbindung und dem Alkylenrest gebildete Ring 5 oder 6 C-Atome. Beispiele von Alkylenresten umfassen insbesondere einen 1,3-Propylen oder einen 1,4-Butylenrest, die auch noch weitere Alkylgruppen als Substituenten aufweisen können. Bei n handelt es sich um eine ganze Zahl von 0 bis 5, bevorzugt 0 bis 3 und ganz besonders bevorzugt 0 oder 1.

Beispiele geeigneter Monomere (B) der Formel (I) umfassen Maleinsäure, Fumarsäure, Methylfumarsäure, Methylmaleinsäure, Dimethylmaleinsäure sowie gegebenenfalls die entsprechenden cyclischen Anhydride. Beispiele für Formel (II) umfassen Methylenmalonsäure und Itaconsäure. Bevorzugt werden Monomere der Formel (I) eingesetzt, besonders bevorzugt sind Maleinsäure bzw. Maleinsäureanhydrid.

Es werden 20,01 bis 70 Gew. % der Monomere (B) eingesetzt, insbesondere 20,1 bis 70 Gew. %, wobei die Mengenangabe auf die Gesamtmenge aller für das Verfahren eingesetzten Monomere bezogen ist. Bevorzugt werden 22 bis 60 Gew. % des Monomers (B), besonders bevorzugt 23 bis 55 Gew. % und ganz besonders bevorzugt 25 bis 45 Gew. % eingesetzt.

Neben den Monomeren (A) und (B) können optional noch eines oder mehrere ethylenisch ungesättigte Monomere (C) eingesetzt werden. Darüber hinaus werden keine anderen Monomere eingesetzt.

Die Monomere (C) dienen zur Feinsteuerung der Eigenschaften des Copolymers. Selbstverständlich können auch mehrere verschiedene Monomere (C) eingesetzt werden. Sie werden vom Fachmann je nach den gewünschten Eigenschaften des Copolymers ausgewählt. Die Monomere (C) sind ebenfalls radikalisch polymerisierbar.

Bevorzugt handelt es sich ebenfalls um monoethylenisch ungesättigte Monomere. In besonderen Fällen können aber auch geringe Mengen von Monomeren mit mehreren polymerisierbaren Gruppen eingesetzt werden. Hierdurch kann das Copolymer in geringem Umfange vernetzt werden.

Bei den Monomeren (C) kann es sich sowohl um saure und/oder basische und/oder neutrale Monomere handeln. Bevorzugt handelt es sich um neutrale Monomere und/oder saure Monomere.

Beispiele geeigneter Monomere (C) umfassen insbesondere Monomere welche Phosphorsäure und/oder Phosphonsäuregruppen aufweisen. Zu nennen sind hier insbesondere Vinylphosphonsäure, Phosphorsäuremonovinylester, Allylphosphonsäure, Phosphorsäuremonoallylester, 3-Butenylphosphonsäure, Phosphorsäure(mono-3-butenyl)ester, Phosphorsäuremono-(4-vinyloxybutyl)ester, Acrylsäure(phosphonoxyethyl)ester, Methacrylsäure(phosphonoxyethyl)ester, Phosphorsäure mono-(-2-hydroxy-3-vinyloxy-propyl)ester, Phosphorsäuremono-(1-phosphonoxymethyl-2-vinyloxy-ethyl)-ester, Phosphorsäuremono-(3-allyloxy-2-hydroxy-propyl)ester, Phosphorsäure mono-2-(allylox-1-phosphonoxymethyl-ethyl)ester, 2-Hydroxy-4-vinyloxymethyl-1,3,2-dioxaphosphol, 2-Hydroxy-4-allyloxymethyl-1,3,2-dioxaphosphol. Es können auch Salze und/oder Ester, insbesondere C₁ bis C₈-Mono-, Di- sowie gegebenefalls Trialkylester der Phosphorsäure und/oder Phosphonsäuregruppen aufweisenden Monomere eingesetzt werden.

Weiterhin geeignet sind sulfonsäuregruppenhaltige Monomere, wie beispielsweise Allylsulfonsäure, Methallylsulfonsäure, Styrolsulfonat, Vinylsulfonsäure, Allyloxybenzolsulfonsäure, 2-Acrylamido-2-methylpropansulfonsäure oder 2-(Methyacryloyl)ethylsulfonsäure bzw. deren Salze und/oder Ester.

Weitere saure Monomere umfassen z.B. Maleinsäurehalbamide.

Beispiele im Wesentlichen neutraler Monomere (C) umfassen C₁- bis C₁₈-Alkylester oder C₁- bis C₄-Hydroxyalkylester der (Meth)acrylsäure, wie Methyl(meth)acrylat, Ethyl(meth)acrylat, Propyl(meth)acrylat, Isopropyl(meth) acrylat, Butyl(meth)acrylat, Hexyl(meth)acrylat, 2-Ethylhexyl (meth)acrylat, Hydroxyethyl(meth)acrylat, Hydroxypropyl(meth) acrylat oder Butandiol-1,4-monoacrylat, (Methyl)styrol, Maleinsäureimid oder Maleinsäure-N-Alkylimid.

Weiterhin geeignet sind Vinyl- oder Allylether wie z.B. Methylvinylether, Ethylvinylether, Propylvinylether, Isobutylvinylether, 2-Ethylhexylvinylether, Vinylcyclohexylether, Vinyl-4-hydroxybutylether, Decylvinylether, Dodecylvinylether, Octadecylvinylether, 2-(Diethylamino)ethylvinylether, 2-(Di-n-butyl-amino)ethylvinylether oder Methyldiglykolvinylether bzw. die entsprechenden Allylverbindungen. Ebenfalls eingesetzt werden können Vinylester wie beispielsweise Vinylacetat oder Vinylpropionat.

Beispiele basischer Monomere umfassen Acrylamide und alkylsubstituierte Acrylamide, wie z.B. Acrylamid, Methacrylamid, N-tert.-Butylacrylamid oder N-Methyl(meth)acrylamid.

Es können auch alkoxylierte Monomere, insbesondere ethoxylierte Monomere eingesetzt werden. Insbesondere geeignet sind alkoxylierte Monomere, die sich von der Acrylsäure oder Methacrylsäure ableiten und die allgemeine Formel (III) aufweisen

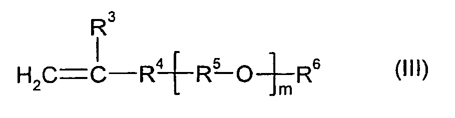

in der die Variablen folgende Bedeutung haben:
- R³: Wasserstoff oder Methyl;
- R⁴: -(CH₂)ₓ-O-, -CH₂-NR⁷-, -CH₂-O-CH₂-CR⁸R⁹-CH₂-O- oder-CONH-; COO-(Ester)
- R⁵: gleiche oder verschiedene C₂-C₄-Alkylenreste, die blockweise oder statistisch angeordnet sein können, wobei der Anteil an Ethylenresten mindestens 50 mol-% beträgt;
- R⁶: Wasserstoff, C₁-C₄-Alkyl, -SO₃M oder -PO₃M₂;
- R⁷: Wasserstoff oder -CH₂-CR¹=CH₂;
- R⁸: -O-[R⁵-O]ₙ-R⁶, wobei die Reste -[R⁵-O]ₙ- von den weiteren in Formel I enthaltenen Resten -[R⁵-O]ₙ- verschieden sein können;
- R⁷: Wasserstoff oder Ethyl;
- M: Alkalimetall oder Wasserstoff, bevorzugt Wasserstoff,
- m: 1 bis 250, bevorzugt 2 bis 50, besonders bevorzugt 3 bis 10;
- x: 0 oder 1.

Beispiele für vernetzende Monomere umfassen Moleküle mit mehreren ethylenisch ungesättigten Gruppen, beispielsweise Di(meth)acrylate wie Ethylenglykol-di(meth)acrylat oder Butandiol-1,4-di(meth)acrylat oder Poly(meth)acrylate wie Trimethylolpropantri(meth)acrylat oder auch Di(meth)acrylate von Oligo- oder Polyalkylenglykolen wie Di-, Tri- oder Tetraethylenglykoldi(meth)acrylat. Weitere Beispiele umfassen Vinyl(meth)acrylat oder Butandioldivinylether.

Der Fachmann trifft unter den Monomeren (C) je nach den gewünschten Eigenschaften des Polymers sowie der gewünschten Anwendung des Polymers eine geeignete Auswahl.

Für die Anwendung zur Behandlung metallischer Oberflächen werden als Monomer (C) bevorzugt Phosphonsäure- und/oder Phosphorsäuregruppen enthaltende Monomere eingesetzt, insbesondere Vinylphosphonsäure oder deren Salze und/oder deren C₁ bis -C₈-Ester. Besonders bevorzugt als Monomer (C) sind Vinylphosphonsäure oder deren Salze und/oder deren C₁ bis -C₈-Ester.

Für die Anwendung zur Faserbindung besonders geeignete Comonomere (C) sind (Meth)acrylsäureester wie beispielsweise Methyl(meth)acrylat, Ethyl(meth)acrylat, Propyl(meth)acrylat oder Butyl(meth)acrylat.

Die Menge aller eingesetzten Monomere (C) zusammen beträgt 0 bis 40 Gew. %, insbesondere 0 bis 30 Gew. %, bezogen auf die Gesamtmenge aller für das Verfahren eingesetzten Monomere. Bevorzugt beträgt die Menge 0 bis 20 Gew. %, besonders bevorzugt 1 bis 15 % und ganz besonders bevorzugt 2 bis 10 Gew. %. Falls vernetzende wirkende Monomere (C) anwesend sind, sollte deren Menge im Regelfalle 5 %, bevorzugt 2 Gew. % bezogen auf die Gesamtmenge aller für das Verfahren eingesetzten Monomere nicht überschreiten. Sie kann beispielsweise 10 ppm bis 1 Gew. % betragen.

Phosphonsäure- und/oder Phosphorsäuregruppen enthaltende Monomere (C), insbesondere Vinylphosphonsäure oder deren Salze und/oder deren C₁ bis -C₈-Ester, können vorteilhaft auch in größeren Mengen eingesetzt werden. Bei Verwendung derartiger Monomerer (C) haben sich Mengen von 5 bis 40 Gew. %, bevorzugt 10 bis 30 Gew. %, besonders bevorzugt 15 bis 28 und ganz besonders bevorzugt 20 bis 25 Gew. % als vorteilhaft erwiesen.

Die eingesetzten Monomere werden radikalisch in wässriger Lösung polymerisiert.

Der Begriff "wässrig" bedeutet, dass das eingesetzte Lösungs- oder Verdünnungsmittel Wasser als Hauptbestandteil aufweist. Daneben können aber auch noch Anteile von mit Wasser mischbaren organischen Lösungsmitteln vorhanden sein sowie gegebenenfalls geringe Mengen von Emulgatoren. Dies kann vorteilhaft sein, um die Löslichkeit bestimmter Monomere, insbesondere der Monomere (C) im Reaktionsmedium zu verbessern.

Das eingesetzte Lösungs- oder Verdünnungsmittel weist dementsprechend mindestens 50 Gew. % Wasser bezüglich der Gesamtmenge des Lösungsmittels auf. Daneben können ein oder mehrere mit Wasser mischbare Lösungsmittel eingesetzt werden. Zu nennen sind hier insbesondere Alkohole, beispielsweise Monoalkohole wie Ethanol, Propanol oder Isopropanol, Dialkohole wie Glykol, Diethylenglykol oder Polyalkylenglykole bzw. Derivate davon. Bevorzugte Alkohole sind Propanol und Isopropanol. Bevorzugt beträgt der Wasseranteil mindestens 70 Gew. %, stärker bevorzugt mindestens-80 Gew. %, besonders bevorzugt mindestens 90 Gew. %. Ganz besonders bevorzugt wird ausschließlich Wasser eingesetzt.

Die Menge der jeweils eingesetzten Monomere wird vom Fachmann so gewählt, dass die Monomere im jeweils eingesetzten Löse- oder Verdünnungsmittel löslich sind. Schlechter lösliche Monomere werden dementsprechend vom Fachmann nur in dem Maße eingesetzt, in dem sie sich lösen lassen. Gegebenfalls können zur Erhöhung der Löslichkeit geringe Mengen von Emulgatoren zugegeben werden.

Erfindungsgemäß wird die Polymerisation in Gegenwart von 2 bis 19,9 mol % mindestens eines Amins vorgenommen. Diese Mengenangabe bezieht sich auf die Gesamtmenge aller COOH-Gruppen der Monocarbonsäure (A) und der Dicarbonsäuren (B). Andere, gegebenenfalls vorhandene saure Gruppen bleiben außer Betracht. Mit anderen Worten sind die COOH-Gruppen also zu einem Teil neutralisiert. Selbstverständlich kann auch ein Gemisch von zwei oder mehreren organischen Aminen eingesetzt werden.

Die eingesetzten Amine können eine oder mehrere primäre und/oder sekundäre und/oder tertiäre Aminogruppen sowie die entsprechende Anzahl organischer Gruppen aufweisen. Bei den organischen Gruppen kann es sich um Alkyl-, Aralkyl-, Aryl- oder Alkylarylgruppen handeln. Bevorzugt handelt es sich um geradkettige oder verzweigte Alkylgruppen. Sie können darüber hinaus weitere funktionelle Gruppen aufweisen. Bei derartigen funktionellen Gruppen handelt es sich bevorzugt um OH-Gruppen und/oder Ethergruppen. Es können auch Amine eingesetzt werden, die an sich nicht gut wasserlöslich sind, weil im Kontakt mit den sauren Monomeren durch Bildung von Ammoniumionen die Wasserlöslichkeit vorteilhaft erhöht wird. Die Amine können auch ethoxyliert werden.

Beispiele geeigneter Amine umfassen lineare, cyclische und/oder verzweigte C₁ - C₈-Mono-, Di- und Trialkylamine, lineare oder verzweigte C₁ - C₈-Mono-, Di- oder Trialkanolamine, inbesondere Mono-, Di- oder Trialkanolamine, lineare oder verzweigte C₁ - C₈-Alkylether linearer oder verzweigter C₁ - C₈-Mono-, Di- oder Trialkanolamine, Oligo-und Polyamine wie beispielsweise Diethylentriamin.

Bei den Aminen kann es sich auch um heterocyclische Amine handeln, wie beispielsweise Morpholin, Piperazin, Imidazol, Pyrazol, Triazole, Tetrazole, Piperidin. Besonders vorteilhaft können solche Heterocyclen eingesetzt werden, welche korrosionsinhibierende Eigenschaften aufweisen. Beispiele umfassen Benztriazol und/oder Tolyltriazol. Durch diese Kombination können Korrosionsschutzeigenschaften noch verbessert werden.

Weiterhin können auch Amine eingesetzt werden, welche ethylenisch ungesättigte Gruppen aufweisen, insbesondere monoethylenische Amine. Derartige Amine erfüllen eine Doppelfunktion als Amin zum Neutralisieren sowie als Monomer (C). Beispielsweise kann Allylamin eingesetzt werden.

Der Fachmann trifft unter den Aminen eine geeignete Auswahl.

Bevorzugt sind Amine mit nur einer Aminogruppe. Weiterhin bevorzugt sind lineare, oder verzweigte C₁ - C₈-Mono-, Di- oder Trialkanolamine, besonders bevorzugt sind Mono-, Di- und Triethanolamin und/oder die entsprechenden ethoxylierten Produkte.

Die Menge des eingesetzten Amins beträgt 3 bis 16 mol % und bevorzugt 4 bis 14 mol %. Ganz besonders bevorzugt sind 5 bis 7 mol % sowie 11 bis 14 mol %.

Das Amin kann vor oder während der Polymerisation zugegeben werden. Bevorzugt wird es bereits vor oder spätestens zu Beginn der Polymerisation zugegeben. Dabei kann die Base entweder auf einmal oder in einem Zeitintervall, das maximal der gesamten Reaktionsdauer entspricht zugesetzt werden. Das Amin kann hierbei dem Monomerenzulauf, entweder der Monocarbonsäure, der Dicarbonsäure oder beiden beigemischt und mit diesen zudosiert werden. Mit anderen Worten werden die Carbonsäuren also teilweise in Form der entsprechenden Ammoniumsalze zudosiert. Vorzugsweise wird das Amin direkt in Vorlage eindosiert. Zur Durchführung der Polymerisation hat es sich hierbei bewährt, die Dicarbonsäure oder gegebenenfalls deren cyclisches Anhydrid vorzulegen und danach das Amin zuzudosieren, noch bevor weitere Monomere und/oder Initiator zudosiert werden, ohne dass die Erfindung damit auf diese Vorgehensweise festgelegt sein soll.

Die radikalische Polymerisation wird bevorzugt durch die Verwendung geeigneter thermisch aktivierbarer Polymerisationsinitiatoren gestartet. Sie kann alternativ aber beispielsweise auch durch geeignete Strahlung ausgelöst werden. Die radikalischen Initiatoren sollten im Lösemittel der Reaktion löslich, bevorzugt wasserlöslich sein.

Unter den thermisch aktivierbaren Polymerisationsinitiatoren sind Initiatoren mit einer Zerfallstemperatur im Bereich von 30 bis150°C, insbesondere von 50 bis 120°C, bevorzugt. Diese Temperaturangabe bezieht sich wie üblich auf 10h-Halbwertszeit.

Als Initiatoren können sämtliche unter den Polymerisationsbedingungen in Radikale zerfallende Verbindungen eingesetzt werden, wie zum Beispiel anorganische Peroxoverbindungen, wie Peroxodisulfate, insbesondere Ammonium-, Kalium- und vorzugsweise Natriumperoxodisulfat, Peroxosulfate, Hydroperoxide, Percarbonate und Wasserstoffperoxid und die sogenannten Redoxinitiatoren. Bevorzugt ist der Einsatz von wasserlöslichen Initiatoren. In manchen Fällen ist es vorteilhaft, Mischungen verschiedener Initiatoren zu verwenden, beispielsweise Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden.

Geeignete organische Peroxoverbindungen sind Diacetylperoxid, Di-tert.-butylperoxid, Diamylperoxid, Dioctanoylperoxid, Didecanoylperoxid, Dilauroylperoxid, Dibenzoylperoxid, Bis(o-toloyl)peroxid, Succinylperoxid, tert.-Butylperacetat, tert.-Butylpermaleinat, tert.-Butylperisobutyrat, tert.-Butyl-perpivalat, tert.-Butylperoctoat, tert.-Butylperneodecanoat, tert.-Butylperbenzoat, tert.-Butylperoxid, tert.-Butylhydroperoxid, Cumolhydroperoxid, tert.-Butylperoxi-2-ethyl-hexanoat und Diisopropylperoxidicarbamat.

Bevorzugte Initiatoren sind außerdem Azoverbindungen. Diese können in organischen Lösungsmitteln löslich sein, wie beispielsweise 2,2'-Azobis(4-methoxy-2,4-dimethyl valeronitril), Dimethyl 2,2'-azobis(2-methylpropionat), 1,1'-Azobis(cyclohexane-1-carbonitril), 1-[(cyano-1-methylethyl)azo]formamid, 2,2'-Azobis(N-cyclohexyl-2-methylpropionamid), 2,2'-Azobis(2,4-dimethyl valeronitril), 2,2'-Azobis(2-methylbutyronitril), 2,2'-Azobis[N-(2-propenyl)-2-methylpropionamid], 2,2'-Azobis(N-butyl-2-methylpropionamid). Bevorzugt werden wasserlösliche Verbindungen eingesetzt, wie z. B. 2,2'-Azobis[2-(5-methyl-2-imidazolin-2-yl)propan]dihydrochlorid, 2,2'-Azobis[2-(2-imidazolin-2-yl)propandisulfatedihydrate, 2,2'-Azobis[N-(2-carboxyethyl)-2-methylpropionamidin]tetrahydrat, 2,2'-Azobis{2-[1-(2-hydroxyethyl)-2-imidazolin-2-yl]propan}dihydrochlorid, 2,2'-Azobis{2-methyl-N-[1,1-bis(hydroxymethyl)-2-hydroxyethyl] propionamid, 2,2'-Azobis[2-methyl-N-(2-hydroxyethyl)propionamid], 2,2'-Azobis[2-(2-imidazolin-2-yl)propan] dihydrochloride, 2,2'-Azobis(2-methylpropionamide)dihydrochlorid, 2,2'-Azobis[2-(3,4,5,6-tetrahydropyrimidin- 2-yl)propan] dihydrochloride, 2,2'-Azobis[2-(2-imidazolin-2-yl)propan], 2,2'-Azobis{2-methyl-N-[2-(1-hydroxybuthyl)]propionamid}.

Weiterhin bevorzugte Initiatoren sind Redoxinitiatoren. Die Redoxinitiatoren enthalten als oxidierende Komponente mindestens eine der oben angegebenen Peroxoverbindungen und als reduzierende Komponente beispielsweise Ascorbinsäure, Glukose, Sorbose, Ammonium- oder Alkalimetallhydrogensulfit, -sulfit, -thiosulfat, -hyposulfit, - pyrosulfit, -sulfid oder Natriumhydroxymethylsulfoxylat. Vorzugsweise verwendet man als reduzierende Komponente des Redoxkatalysators Ascorbinsäure oder Natriumpyrosulfit. Bezogen auf die bei der Polymerisation eingesetzte Menge an Monomeren verwendet man beispielsweise 1 x 10⁻⁵ bis 1 mol-% der reduzierenden Komponente des Redoxkatalysators.

In Kombination mit den Initiatoren bzw. den Redoxinitiatorsystemen können zusätzlich Übergangsmetallkatalysatoren eingesetzt werden, z.B. Salze von Eisen, Kobalt, Nickel, Kupfer, Vanadium und Mangan. Geeignete Salze sind z.B. Eisen(II)sulfat, Kobalt(II)-chlorid, Nickel(II)sulfat, Kupfer(I)chlorid. Das reduzierend wirkende Übergangsmetallsalz wird üblicherweise in einer Menge von 0,1 bis 1 000 ppm, bezogen auf die Summe der Monomeren, eingesetzt. Besonders vorteilhaft sind beispielsweise Kombinationen aus Wasserstoffperoxid und Eisen(II)salzen, wie eine Kombination von 0,5 bis 30 Gew.-% Wasserstoffperoxid und 0,1 bis 500 ppm FeSO₄ x 7 H₂O, jeweils bezogen auf die Summe der Monomeren.

Beispiele für geeignete Photoinitiatoren umfassen Acetophenon, Benzoinether, Benzyldialkylketone und deren Derivate.

Vorzugsweise werden thermische Initiatoren eingesetzt, wobei wasserlösliche Azoverbindungen und wasserlösliche Peroxoverbindungen bevorzugt sind. Besonders bevorzugt sind anorganische Peroxoverbindungen, insbesondere Wasserstoffperoxid und vor allem Natriumperoxodisulfat oder Mischungen hieraus, optional in Kombination mit 0,1 bis 500 ppm FeSO₄ x 7 H₂O Ganz besonders bevorzugt ist Wasserstoffperoxid.

Selbstverständlich können auch Gemische verschiedener Initiatoren eingesetzt werden, vorausgesetzt sie beeinflussen sich nicht negativ. Die Menge wird vom Fachmann je nach dem gewünschten Copolymer festgelegt. Im Regelfalle werden 0,05 Gew. % bis 30 Gew. %, bevorzugt 0,1 bis 15 Gew. % und besonders bevorzugt 0,2 bis 8 Gew. % des Initiators bezüglich der Gesamtmenge aller Monomere eingesetzt.

Außerdem können in prinzipiell bekannter Art und Weise auch geeignete Regler, wie beispielsweise Mercaptoethanol eingesetzt werden. Bevorzugt werden keine Regler eingesetzt.

Erfindungsgemäß wird die Polymerisation bei einer Temperatur von 80°C bis weniger als 130°C vorgenommen. Hierdurch wird sichergestellt, dass die Polymere ein ausreichendes Molekulargewicht M_{w}, zumindest aber ein M_{w} von 3000 g/mol aufweisen.

Abgesehen davon kann die Temperatur vom Fachmann innerhalb weiter Grenzen je nach der Art der eingesetzten Monomere, des Initiators und dem gewünschten Copolymer variiert werden. Die Temperatur kann während der Polymerisation konstant gehalten werden oder es können auch Temperaturprofile gefahren werden.

Bevorzugt beträgt die Polymerisationstemperatur bis 125°C, besonders bevorzugt 80 bis 120°C, ganz besonders bevorzugt 90 bis 110°C und beispielsweise 95 bis 105°C:

Die Polymerisation kann in üblichen Apparaturen zur radikalischen Polymerisation vorgenommen werden. Sofern man oberhalb der Siedetemperatur des Wassers bzw. des Gemisches aus Wasser und weiteren Lösemitteln arbeitet, wird in einem geeigneten Druckgefäß gearbeitet, ansonsten kann drucklos gearbeitet werden.

Bei der Polymerisation hat es sich regelmäßig bewährt, die Dicarbonsäure bzw. entsprechende Anhydride in wässriger Lösung vorzulegen. Hiernach kann das Amin, zweckmäßigerweise als wässrige Lösung, zugegeben werden. In wässriger Lösung, insbesondere in Gegenwart des Amins, hydrolysieren die Carbonsäureanhydride mehr oder weniger schnell zu den entsprechenden Dicarbonsäuren. Danach können die Monocarbonsäure, gegebenenfalls weitere Monomere (C) sowie der Initiator, zweckmäßigerweise ebenfalls in wässriger Lösung zudosiert werden. Bewährt haben sich Zulaufzeiten von 0,5 h bis 24 h, bevorzugt 1 h bis 12 h und besonders bevorzugt 2 bis 8 h. Auf diese Art und Weise wird die Konzentration der reaktionsfreudigeren Monocarbonsäuren in der wässrigen Lösung relativ gering gehalten. Hierdurch verringert sich die Tendenz zur Reaktion der Monocarbonsäure mit sich selbst und es wird ein gleichmäßigerer Einbau der Dicarbonsäureeinheiten in das Copolymere erreicht. Nach dem Zulauf aller Monomere kann sich auch noch eine Nachreaktionszeit, beispielsweise von 0,5 bis 3 h anschließen. Hierdurch wird sichergestellt, dass die Polymerisationsreaktion so vollständig wie möglich verläuft. Die Vervollständigung kann auch erreicht werden, indem man noch einmal Polymerisationsinitiator nachdosiert.

Der Fachmann kann die Polymerisation aber selbstverständlich auch auf andere Art und Weise vornehmen.

Nicht nur Carbonsäureanhydride, sondern auch andere eingesetzte Monomere, welche hydrolysierbare Gruppen aufweisen, wie beispielsweise Ester, können je nach den Polymerisationsbedingungen unter Umständen ganz oder teilweise hydrolysieren. Die Copolymere enthalten dann die Monomere mit der aus der Hydrolyse resultierenden Säuregruppe einpolymerisiert oder auch sowohl nicht hydrolysierte Gruppen wie hydrolysierte Gruppen nebeneinander.

Die synthetisierten Copolymere können aus der wässrigen Lösung mittels üblicher, dem Fachmann bekannter Methoden isoliert werden, beispielsweise durch Eindampfen der Lösung, Sprühtrocknen, Gefriertrocknen oder Fällung. Die Polymere können selbstverständlich auch mittels dem Fachmann bekannten Reinigungsmethoden gereinigt werden, beispielsweise durch Ultrafiltration.

Besonders bevorzugt werden die Copolymere nach der Polymerisation aber überhaupt nicht aus der wässrigen Lösung isoliert und auch nicht gereinigt, sondern die erhaltenen Lösungen der Copolymerlösungen werden als solche verwendet.

Um eine solche direkte Weiterverwendung zu erleichtern, sollte die Menge des wässrigen Lösemittels von Anfang an so bemessen werden, dass die Konzentration des Polymers im Lösemittel für die Anwendung geeignet ist. Besonders bewährt hat sich eine Konzentration von 15 bis 70 Gew. % bezüglich der Summe aller Komponenten, bevorzugt 20 bis 65 Gew. %, besonders bevorzugt 25 bis 60 Gew. % und beispielsweise 45 bis 55 Gew. %.

Mittels des erfindungsgemäßen Verfahrens sind teilneutralisierte, carboxylatreiche Copolymere erhältlich.

Die Zusammensetzung der Copolymere entspricht im Wesentlichen dem Verhältnis der eingesetzten Monomere (A), (B) sowie optional (C). Im Regelfalle umfassen die Copolymere daher 30 bis 79,99 Gew. % monoethylenisch ungesättigter Monocarbonsäuren, 20,01 bis 70 Gew. % monoethylenisch ungesättigter Dicarbonsäuren der allgemeinen Formel (HOOC)R¹C=CR²(COOH) (I) und/oder R¹R²C=C(-(CH₂)ₙ-COOH)(COOH) (II), sowie gegebenenfalls 0 bis 30 Gew. % weiterer, ethylenisch ungesättigter Comonomerer (C) wobei R¹, R² und n wie oben definiert sind.

Sofern hydrolysierbare Derivate der Monomere (B) eingesetzt wurden, kann das Polymer je nach der Hydrolysegeschwindigkeit und den Bedingungen auch noch Anteile nicht hydrolysierter Monomere enthalten.

Das erfindungsgemäße Verfahren führt trotz der geringen Menge an Base dennoch zu Copolymeren, welche nur geringe Mengen an nicht einpolymerisierten Dicarbonsäuren aufweisen.

Der Restanteil nicht einpolymerisierter Dicarbonsäuren im Produkt liegt niedriger als bei Verwendung anderer Basen.

Der Restgehalt beträgt auch bei Polymeren mit größeren Gehalten an Dicarbonsäuren im Regelfalle nicht mehr als 2 Gew. % bezüglich des Copolymers.

Der Restgehalt an Monocarbonsäuren (A) ist ebenfalls sehr niedrig, er beträgt im Regelfalle nicht mehr als 0,1 Gew. % bezüglich des Copolymers.

Im Regelfalle weisen die Copolymere einen Neutralisationsgrad der COOH-Gruppen aller Mono- und Dicarbonsäureeinheiten von 3 bis 16 mol % bezüglich der Gesamtmenge aller COOH-Gruppen in den Mono- bzw. Dicarbonsäureeinheiten auf. Im Regelfalle ergibt sich der Neutralisationsgrad einfach aus der Menge des ursprünglich zugegebenen Amins. Je nach Art des Amins, insbesondere dessen Flüchtigkeit und Basizität, können aber auch geringe Mengen des Amins im Zuge der Polymerisation und/oder der Aufarbeitung verloren gehen. Bei Verwendung von basischen Monomeren (C) kann der Neutralisationsgrad u.U. auch höher sein, als sich aus der Menge des Amins ergibt. Die Amine liegen im Produkt im Regelfalle als Ammoniumionen vor, je nach der Basizität des Amins können aber auch gewissen Anteile des Amins unprotoniert im Produkt vorliegen.

Die erfindungsgemäßen Copolymere sind in Wasser oder mindestens 50 Gew. % Wasser enthaltenden wässrigen Lösemittelgemischen löslich oder zumindest dispergierbar, wobei dem Fachmann bekannt ist, dass die Löslichkeit von COOH-reichen Polymeren stark pH-abhängig sein kann. Der Begriff "wasserdispergierbar" bedeutet, dass die Lösung zwar nicht ganz klar ist, aber das Polymer homogen darin verteilt ist und sich auch nicht absetzt. Bevorzugt handelt es sich um Copolymere, die wasserlöslich sind.

Der pH-Wert der Polymere beträgt im Regelfalle weniger als 5, bevorzugt weniger als 4 und besonders bevorzugt weniger als 3.

Das Molekulargewicht M_{w} (Gewichtsmittel) der Copolymere beträgt mindestens 3000 g/mol, bevorzugt mindestens 5000 g/mol, besonders bevorzugt mindestens 8 000 g/mol und ganz besonders bevorzugt 15 000 g/mol. Es können auch Molekulargewichte von mehr als 1 000 000 g/mol erreicht werden. Üblicherweise beträgt M_{w} 3000 g/mol bis 1 500 000 g/mol, bevorzugt 5000 g/mol bis 1 000 000 g/mol, besonders bevorzugt 8000 g/mol bis 750 000 g/mol und beispielsweise 15 000 g/mol bis 500 000 g/mol. Das Molekulargewicht wird vom Fachmann je nach der gewünschten Anwendung festgelegt. Bevorzugte Copolymere umfassen Acrylsäure und Maleinsäure als Monomere sowie gegebenenfalls weitere Comonomere (C). Bei weiteren Comonomeren kann es sich bevorzugt um Phosphor- oder Phosphonsäuregruppen-haltige Monomere handeln, beispielsweise Vinylphosphonsäure oder um (Meth)acrylsäureester wie beispielsweise Methyl(meth)acrylat, Ethyl(meth)acrylat, Propyl(meth)acrylat oder Butyl(meth)acrylat.

Besonders bevorzugt sind Copolymere, welche Acrylsäure, Maleinsäure sowie 5 bis 40 Gew. % Phosphonsäure- und/oder Phosphorsäuregruppen enthaltende Monomere (C) umfassen. Bevorzugt handelt es sich bei Monomer (C) um Vinylphosphonsäure bzw. deren Salze und/oder deren C₁ bis -C₈-Ester, besonders bevorzugt um Vinylphosphonsäure.

Ein weiterer Aspekt betrifft die Verwendung der erfindungsgemäßen Copolymere zur Behandlung von Oberflächen. Hierbei kann es sich beispielsweise um metallische Oberflächen oder um die Oberfläche von Fasern oder textilen Materialien handeln. Durch die hohe Dichte von nicht neutralisierten COOH-Gruppen wird eine besonders gute Haftung der Copolymere auf den Oberflächen erreicht.

Die Polymere können insbesondere zur Behandlung metallischer Oberflächen verwendet werden. Hierzu können die erfindungsgemäßen Polymere insbesondere als Komponenten entsprechender Formulierungen eingesetzt werden, beispielsweise als Komponenten von Reinigern, Beizlösungen, Korrosionsschutzmitteln und/oder Formulierungen zum Passivieren.

Die Copolymere können besonders vorteilhaft zur Passivierung von metallischen Oberflächen bzw. zur Ausbildung von Passivierungsschichten auf Metallen eingesetzt werden. Sie eignen sich insbesondere für die chromfreie Passivierung. Anstelle des Begriffs "Passivierungsschicht" wird häufig auch der Begriff "Konversionsschicht" synonym verwendet, manchmal auch der Begriff "Vorbehandlungsschicht" oder "Nachbehandlungsschicht", je nachdem an welcher Stelle des Verfahrens passiviert wird.

Es können beliebige metallische Oberflächen mittels der Polymere behandelt, insbesondere passiviert werden. Bevorzugt handelt es sich aber um Oberflächen aus Zn, Zn-Legierungen, Al oder Al-Legierungen. Es kann sich dabei um die Oberflächen von vollständig aus den besagten Metallen bzw. Legierungen bestehenden Körpern beziehungsweise Werkstücken handeln. Es kann sich aber auch um die Oberflächen von mit Zn, Zn-Legierungen, Al oder AI-Legierungen beschichteten Körpern handeln, wobei die Körper aus anderen Materialien, beispielsweise aus anderen Metallen, Legierungen, Polymeren oder Verbundwerkstoffen bestehen kann. Insbesondere kann es sich um die Oberfläche von verzinktem Eisen oder unverzinktem oder verzinktem Stahl handeln. Bei dem Stahl kann es sich um hoch legierte oder um niedrig legierte Stähle handeln. In einer besonderen Ausführungsform des Verfahrens handelt es sich um die Oberfläche eines Bandmetalles, insbesondere um elektrolytisch verzinkten oder heißverzinkten Stahl. In einer weiterhin bevorzugten Ausführungsform kann es sich um eine Automobilkarosserie handeln.

Zn- oder Al-Legierungen sind dem Fachmann bekannt. Je nach dem gewünschten Anwendungszweck wählt der Fachmann Art und Menge von Legierungsbestandteilen aus. Typische Bestandteile von Zink-Legierungen für Schmelztauchverfahren umfassen insbesondere Al, Pb, Si, Mg, Sn, Cu oder Cd. Typische Legierungskomponenten in Zn-Legierungen, die elektrolytisch abgeschieden werden, sind Ni, Fe, Co und Mn: Typische Bestandteile von Aluminium-Legierungen umfassen insbesondere Mg, Mn, Si, Zn, Cr, Zr, Cu oder Ti. Es kann sich auch um Al/Zn-Legierungen handeln, bei denen Al-und Zn in annähernd gleicher Menge vorhanden sind. Mit derartigen Legierungen beschichteter Stahl ist kommerziell erhältlich.

Zur Behandlung metallischer Oberflächen können bevorzugt Acrylsäure-Maleinsäure-Copolymere mit einem Maleinsäuregehalt von 20,01 bis 40 Gew. %, beispielsweise 25 bis 40 Gew. % eingesetzt werden. Weiterhin bevorzugt sind Terpolymere aus 55 bis 78, bevorzugt 65 bis 78 und besonders bevorzugt 65 bis 75 Gew. % Acrylsäure, 20,01 bis 34 Gew. %, bevorzugt 21 bis 34 und besonders bevorzugt 22 bis 30 Gew. % Maleinsäure sowie 1 bis 24,99, bevorzugt 2 bis 24 und besonders bevorzugt 5 bis 22 Gew. % Vinylphosphonsäure, die u.U. auch noch teilweise als deren Ester vorliegen kann.

Beispielsweise kann ein Terpolymer aus 71 bis 73 Gew. % Acrylsäure, 23 bis 25 Gew. % Maleinsäure sowie 3 bis 5 Gew. % Vinylphosphonsäure eingesetzt werden. Weitere Beispiele umfassen Terpolymere aus 55 bis 62 Gew. % Acrylsäure, 20,01 bis 22 Gew. % Maleinsäure sowie 16 bis 24 Gew. % Vinylphosphonsäure sowie Terpolymere aus 65 bis 70 Gew. % Acrylsäure, 21 bis 25 Gew. % Maleinsäure sowie 6 bis 12 Gew. % Vinylphosphonsäure.

Bevorzugt werden Copolymere mit höherem Molekulargewicht M_{w} zur Behandlung metallischer Oberflächen eingesetzt, insbesondere solche mit M_{w} von 5000 bis 1,5 Mio g/mol, bevorzugt 10 000 bis 1 Mio g/mol, besonders bevorzugt 20 000 bis 800 000 g/mol und ganz besonders bevorzugt 50 000 bis 500 000 g/mol.

Bei Acrylsäure/Maleinsäure/Vinylphosphonsäure-Terpolymeren können bevorzugt Polymere mit einem Molekulargewicht M_{w} von 10 000 bis 100 000 g/mol, bevorzugt 15 000 bis 80 000 g/mol, besonders bevorzugt von 20 000 bis 50 000 g/mol und beispielsweise von 20 000 bis 30 000 g/mol eingesetzt werden.

Die Copolymere werden zur Behandlung von metallischen Oberflächen bevorzugt in Form einer geeigneten Zubereitung eingesetzt. Die eingesetzte Zubereitung umfasst mindestens
- eines oder mehrere erfindungsgemäße Copolymere,
- Wasser oder ein mindestens 50 Gew. % Wasser enthaltendes wässriges Lösungsmittelgemisch, sowie
- optional weitere Komponenten.

Bevorzugt wird nur Wasser als Lösemittel eingesetzt. Weitere Komponenten eines Gemisches sind mit Wasser mischbare Lösungsmittel. Beispiele umfassen Monoalkohole wie Methanol, Ethanol oder Propanol, höhere Alkohole wie Ethylenglykol oder Polyetherpolyole und Etheralkohole wie Butylglykol oder Methoxypropanol. Falls ein wässriges Gemisch eingesetzt wird, umfasst das Gemisch bevorzugt mindestens 65 Gew. %, besonders bevorzugt mindestens 80 Gew. % und ganz besonders bevorzugt mindestens 95 Gew. % Wasser. Die Angaben beziehen sich jeweils auf die Gesamtmenge aller Lösemittel.

Besonders bevorzugt werden die polymerhaltigen Lösungen eingesetzt, die unmittelbar aus der Polymerisation resultieren. Sie können gegebenenfalls noch weiter verdünnt werden und/oder es können weitere Komponenten zugegeben werden.

Die Konzentration der Copolymere in der Zubereitung wird vom Fachmann je nach dem gewünschten Anwendungszweck bestimmt. Beispielsweise hängt die Dicke der Passivierungsschicht von der zum Aufbringen gewählten Verfahrenstechnik ab, aber auch beispielsweise von der Viskosität der zum Passivieren eingesetzten Zusammensetzung. Im allgemeinen bewährt hat sich eine Konzentration von 0,01 g/l bis 500 g/l, bevorzugt 0,1 g/l bis 200 g/l, und besonders bevorzugt 0,5 g/l bis 100 g/l. Die angegebenen Konzentrationen beziehen sich auf die einsatzfertige Zubereitung. Es ist im Regelfalle möglich, zunächst ein Konzentrat herzustellen, welches erst vor Ort mit Wasser oder optional anderen Lösemittelgemischen auf die gewünschte Konzentration verdünnt wird. Zum Einsatz in Tauchverfahren bewährt haben sich Konzentrationen von 0,1 bis 100 g/l. Zum Einsatz in Verfahren, bei denen überschüssige Zubereitung abgequetscht oder auf eine andere Art und Weise entfernt wird, haben sich auch Zubereitungen höherer Konzentration bewährt, insbesondere solche mit 150 bis 300 g/l.

Die eingesetzte Zubereitung ist sauer. Sie weist im Allgemeinen einen pH-Wert von 0,5 bis 6 auf, wobei je nach Substrat und Applikationsart sowie Einwirkungsdauer der Zubereitung auf die Oberfläche engere pH-Bereiche gewählt sein können. Beispielsweise stellt man den pH-Wert zur Behandlung von Aluminiumoberflächen vorzugsweise auf den Bereich von 1 bis 4 und bei Behandlung von Zink oder verzinktem Stahl vorzugsweise auf den Bereich von 1 bis 5 ein.

Der pH-Wert der Zubereitung kann durch die Art und Konzentration der erfindungsgemäßen Copolymere gesteuert werden und ergibt sich somit automatisch.

Die Zubereitung kann aber optional auch noch mindestens eine anorganische oder organische Säure oder deren Mischungen umfassen. Beispiele geeigneter Säuren umfassen phosphor-, schwefel- oder stickstoffhaltige Säuren wie Phosphorsäure, Phosphonsäure, Schwefelsäure, Sulfonsäuren wie Methansulfonsäure, Amidosulfonsäure, p-Toluolsulfonsäure, m-Nitrobenzolsulfonsäure und Derivaten davon, Salpetersäure, Flusssäure, Salzsäure, Ameisensäure oder Essigsäure. Bevorzugt wird die Säure ausgewählt aus der Gruppe bestehend aus HNO₃, H₂SO₄, H₃PO₄, Ameisensäure oder Essigsäure. Besonders bevorzugt sind H₃PO₄ und/oder HNO₃. Selbstverständlich können auch Gemische verschiedener Säuren eingesetzt werden. Beispiele für Phosphonsäuren umfassen 1-Hydroxyethan-1,1-diphosphonsäure (HEDP), 2-Phosphonobutan-1,2,4-tricarbonsäure (PBTC), Aminotri(methylenphosphonsäure) (ATMP), Ethylendiamintetra(methylenphosphonsäure) (EDTMP) oder Diethylentriamin-penta(methylenphosphonsäure) (DTPMP).

Die Art und Konzentration der Säure in der Zubereitung wird vom Fachmann je nach dem gewünschten Anwendungszweck und pH-Wert bestimmt. Im allgemeinen bewährt hat sich eine Konzentration von 0,01 g/l bis 30 g/l, bevorzugt 0,05 g/l bis 3 g/l, und besonders bevorzugt 0,1 g/l bis 5 g/l.

Die Zubereitung kann über die genannten Komponenten noch optional weitere Komponenten umfassen.

Bei den optional vorhandenen Komponenten kann es sich beispielsweise um Übergangsmetallionen und -verbindungen, beispielsweise des Ce, Ni, Co, V, Fe, Zn, Zr, Ca, Mn, Mo, W, Ti, Zr, Hf, Bi, Cr und/oder der Lanthaniden handeln. Es kann sich auch um Verbindungen von Hauptgruppenelementen handeln, wie beispielsweise Si und/oder Al. Die Verbindungen können beispielsweise in Form der jeweiligen Aqua-Komplexe eingesetzt werden. Es kann sich aber auch um Komplexe mit anderen Liganden handeln, wie beispielsweise Fluorid-Komplexe von Ti(IV), Zr(IV) oder Si(IV) oder Oxometallate wie beispielsweise MoO₄²⁻ oder WO₄²⁻. Weiterhin kann es sich um Oxide wie beispielsweise ZnO handeln. Weiterhin können auch Komplexe mit typischen chelatbildenden Liganden wie Ethylendiamintetraessigsäure (EDTA), Diethylentriaminpentaessigsäure (DTPA), Hydroxyethylethylendiamintriessigsäure (HEDTA), Nitrilotriessigsäure (NTA) oder Methylglycindiessigsäure (MGDA) eingesetzt werden.

Bei zusätzlichen Komponenten kann es sich bevorzugt um ein gelöstes Metallion ausgewählt aus der Gruppe von Zn²⁺, Mg²⁺ oder Ca²⁺ handeln. Die Ionen können als hydratisierte Metallionen vorliegen, sie können aber auch in Form von gelösten Verbindungen vorliegen, beispielsweise als Komplexverbindungen. Insbesondere können die Ionen Komplexbindungen zu den saueren Gruppen des Polymers aufweisen. Bevorzugt handelt es sich um Zn²⁺ oder Mg²⁺ und ganz besonders bevorzugt um Zn²⁺. Bevorzugt umfasst die Zubereitung daneben keine weiteren Metallionen.

Falls noch weitere Metallionen oder Metallverbindungen anwesend sein sollten, handelt es sich aber bevorzugt um Zubereitungen, welche keine Chromverbindungen enthalten. Weiterhin sollten bevorzugt keine Metallfluoride bzw. komplexen Metallfluoride anwesend sein. Die Passivierung unter Verwendung der erfindungsgemäßen Polymere ist also bevorzugt eine chromfreie Passivierung, besonders bevorzugt eine chrom- und fluoridfreie Passivierung.

Bei der Verwendung werden weiterhin vorzugsweise keine Schwermetallionen außer denen des Zinks und des Eisens, insbesondere keine Ionen des Nickels, Mangans und Cobalts eingesetzt.

Falls vorhanden beträgt die Menge der Metallionen aus der Gruppe von Zn²⁺, Mg²⁺ oder Ca²⁺ 0,01 Gew. % bis 25 Gew. %, bevorzugt 0,5 bis 20 Gew. %, besonders bevorzugt 1 bis 15 Gew. %, und ganz besonders bevorzugt 3 bis 12 Gew. %, jeweils bezogen auf die Gesamtmenge aller Polymere in der Formulierung.

Die Metallionen aus der Gruppe von Zn²⁺, Mg²⁺ oder Ca²⁺ werden bevorzugt als Phosphate eingesetzt. Hierbei kann es sich um alle Arten von Phosphaten handeln. Beispielsweise kann es sich um von der Orthophosphate oder um Diphosphate handeln. Für den Fachmann ist klar, dass in wässriger Lösung je nach pH-Wert und Konzentration ein Gleichgewicht zwischen den verschiedenen Dissoziationsstufen der Ionen vorliegen kann. Beispiele geeigneter Verbindungen umfassen Zn₃(PO₄)₂, ZnH₂PO₄, Mg₃(PO₄)₂ oder Ca(H₂PO₄)₂ bzw. entsprechende Hydrate davon.

Zink- und Phosphationen können aber auch getrennt voreinander zugegeben werden. Beispielsweise können die Metallionen in Form der entsprechenden Nitrate eingesetzt werden, und die Phosphate können in Form von Phosphorsäure eingesetzt werden. Es ist auch möglich, unlösliche- oder schwerlösliche Verbindungen, wie beispielsweise die entsprechenden Carbonate, Oxide, Oxidhydrate oder Hydroxide einzusetzen, welche unter dem Einfluss von Säure gelöst werden.

Falls vorhanden beträgt die Menge der Phosphationen in der Formulierung im Regelfalle 0,01 Gew. % bis 25 Gew. %, bevorzugt 0,5 bis 25 Gew. %, besonders bevorzugt 1 bis 25 Gew. % und ganz besonders bevorzugt 5 bis 25 Gew. %, jeweils gerechnet als Orthophosphorsäure und jeweils bezogen auf die Gesamtmenge der Polymere in der Formulierung.

Weitere optionale Komponenten umfassen oberflächenaktive Verbindungen, Korrosionsinhibitoren, typische Galvanohilfsmittel oder auch weitere, von den erfindungsgemäßen Polymeren verschiedene Polymere.

Der Fachmann trifft unter den prinzipiell möglichen optionalen Komponenten sowie ihren Mengen je nach der gewünschten Anwendung eine entsprechende Auswahl.

Beispiele für weitere Korrosionsinhibitoren umfassen Butindiol, Propargylalkohol sowie deren ethoxylierten Derivate sowie Heterocyclen wie Benzotriazol und Tolyltriazol. Letztere können besonders vorteilhaft schon bei der Synthese der Copolymere als Base eingesetzt werden.

Beispiele weiterer Komponenten umfassen Amine, wie beispielsweise Hydroxylamin, Alkylamine und Alkanolamine oder Salze, wie beispielsweise Nitrite oder Nitrate.

Weitere Polymere können zur Feineinstellung der Eigenschaften der Schicht eingesetzt. Hierbei können insbesondere Polymere mit sauren Gruppen und ganz besonders COOH-Gruppen umfassende Polymere eingesetzt werden. Beispiele derartiger Polymere umfassen Polyacrylsäuren verschiedenen Molekulargewichtes oder auch Copolymere aus Acrylsäure und anderen saueren Monomeren. Es kann sich hierbei auch um Acrylsäure / Maleinsäure-Copolymere handeln, welche sich lediglich im Hinblick auf den Monomerengehalt von den erfindungsgemäßen Copolymeren unterscheiden.

Die Menge derartiger sekundärer Polymerer sollte im Regelfalle 50 Gew. % bezüglich der Menge aller eingesetzten Polymere nicht überschreiten. Bevorzugt beträgt deren Menge 0 bis 30 Gew. %, besonders bevorzugt 0 bis 20 Gew. % und ganz besonders bevorzugt 0 bis 10 Gew. %.

Zum Passivieren metallischer Oberflächen wird die Oberfläche des Metalls mit der Zubereitung behandelt, beispielsweise durch Sprühen, Tauchen oder Aufwalzen. Nach einem Tauchprozess kann man zum Entfernen überschüssiger Behandlungslösung das Werkstück abtropfen lassen; bei Blechen, Metallfolien oder dergleichen lässt sich überschüssige Behandlungslösung aber beispielsweise auch abquetschen oder abrakeln. Bei der Behandlung werden zumindest Teile des eingesetzten Polymers sowie weitere Komponenten der Zubereitung von der Oberfläche des Metalls chemisorbiert und/oder reagieren mit der Oberfläche, so dass eine feste Bindung zwischen Oberfläche und dem Komponenten zustande kommt. Die Behandlung mit der Zubreitung erfolgt im Regelfalle bei Raumtemperatur ohne dass damit höhere Temperaturen prinzipiell ausgeschlossen werden sein sollen. Im Regelfalle erfolgt die Behandlung bei 20 bis 90°C, bevorzugt 25 bis 80°C und besonders bevorzugt 30 bis 60°C. Hierzu kann das Bad mit der Formulierung geheizt werden, eine erhöhte Temperatur kann sich aber auch automatisch einstellen, indem man warmes Metall in das Bad eintaucht.

Bevorzugt handelt es sich bei der Passivierung um eine im Wesentlichen chromfreie Passivierung. Dies soll bedeuten, dass allenfalls geringe Mengen von Chrom-Verbindungen zur Feinsteuerung der Eigenschaften der Passivierungsschicht zugegeben werden könnten. Die Menge sollte 2 Gew. %, bevorzugt 1 Gew. % und besonders bevorzugt 0,5 Gew. % Chrom bezüglich aller Bestandteile der Zusammensetzung nicht überschreiten. Falls Chrom-Verbindungen eingesetzt werden sollen, sollten bevorzugt Cr(III)-Verbindurigen eingesetzt werden. Der Cr(VI)-Gehalt soll aber in jedem Falle so gering gehalten werden, dass der Cr(VI)-Gehalt auf dem passivierten Metall 1 mg/m² nicht überschreitet.

Besonders bevorzugt handelt es sich um eine chromfreie Passivierung, d.h. die eingesetzte Zubereitung enthält keinerlei Cr-Verbindungen. Der Begriff "chromfrei" schließt aber nicht aus, dass indirekt und an sich unbeabsichtigt geringe Mengen Chrom in das Verfahren eingeschleppt werden. Sofern nämlich mittels des erfindungsgemäßen Verfahrens Legierungen passiviert werden, welche Chrom als Legierungsbestandteil umfassen, beispielsweise Cr-haltiger Stahl, ist es immer im Bereich des Möglichen, dass geringe Mengen Chrom im zu behandelnden Metall durch die für das Verfahren eingesetzte Zubereitung gelöst werden und dementsprechend an sich unbeabsichtigt in die Zubereitung gelangen können. Auch beim Einsatz derartiger Metalle und den daraus resultierenden Konsequenzen soll das Verfahren als "chromfrei" angesehen werden.

Es kann sich bei der Behandlung um einen sogenannten "No-rinse" Prozess handeln, bei dem die Behandlungslösung unmittelbar nach dem Aufbringen ohne Abspülen direkt in einem Trockenofen eingetrocknet wird. Es ist aber auch möglich, die Oberfläche nach der Behandlung mit einer Reinigungsflüssigkeit, insbesondere mit Wasser, nachzuspülen, um Reste der eingesetzten Zubereitung von der Oberfläche zu entfernen.

Die Behandlung der Metalloberfläche mit der Zubereitung kann diskontinuierlich oder bevorzugt kontinuierlich erfolgen. Ein kontinuierliches Verfahren eignet sich insbesondere zum Behandeln von Bandmetallen. Das Metallband wird hierbei durch eine Wanne oder eine Sprühvorrichtung mit der Zubereitung sowie optional durch weitere Vor-oder Nachbehandlungsstationen gefahren. Ein kontinuierliches Verfahren zur Herstellung von Stahlbändern kann beispielsweise eine Verzinkungsstation, gefolgt von einer Vorrichtung zum Passivieren mit der Zubereitung umfassen.

Die Behandlungsdauer wird vom Fachmann je nach den gewünschten Eigenschaften der Schicht, der zur Behandlung eingesetzten Zusammensetzung und den technischen Rahmenbedingungen festgelegt. Sie kann deutlich weniger als eine Sekunde oder mehrere Minuten betragen. Beim kontinuierlichen Verfahren hat es sich besonders bewährt, die Oberfläche mit der Zubereitung für eine Dauer von 1 bis 60 s in Kontakt zu bringen.

Nach der Behandlung wird das eingesetzte Lösemittel entfernt. Die Entfernung kann bei Raumtemperatur durch einfaches Verdampfen an Luft bei Raumtemperatur erfolgen.

Das Entfernen des Lösemittels kann aber auch durch geeignete Hilfsmittel unterstützt werden, beispielsweise durch Erwärmung und/oder durch Überleiten von Gasströmen, insbesondere Luftströmen. Das Abdampfen des Lösemittels kann beispielsweise durch IR-Strahler unterstützt werden, oder auch beispielsweise durch Trocknen in einem Trockenkanal.. Bewährt hat sich zum Trocknen eine Temperatur von 30°C bis 210°C, bevorzugt 40°C bis 120°C und besonders bevorzugt 40°C bis 80°C. Gemeint ist hiermit die auf dem Metall gefundene Spitzentemperatur (Peak metal temperature (PMT)), die durch dem Fachmann geläufige Verfahren (beispielsweise berührungslose Infrarotmessung oder Bestimmung der Temperatur mit aufgeklebten Teststreifen) gemessen werden kann. Die Trocknertemperatur muss gegebenenfalls höher eingestellt werden und wird vom Fachmann entsprechend gewählt.

Das erfindungsgemäße Verfahren kann optional auch noch einen oder mehrere Vorbehandlungsschritte umfassen. Beispielsweise kann die metallische Oberfläche vor dem Passivieren mit der erfindungsgemäß eingesetzten Zubereitung gereinigt werden, z.B. um Fette oder Öle zu entfernen. Weiterhin kann sie vor dem Passivieren auch gebeizt werden, um oxidische Beläge, Zunder, einen temporären Korrosionsschutz und dergleichen zu entfernen. Weiterhin muss die Oberfläche nach und zwischen derartigen Vorbehandlungsschritten auch gegebenenfalls mit Wasser gespült werden, und die Reste von Spüllösungen oder Beizlösungen zu entfernen.

Die Passivierungsschicht kann auch noch zusätzlich vernetzt werden. Hierzu kann der Zubereitung ein Vernetzer beigemischt werden. Es kann aber auch zunächst das Metall mit der Zubereitung behandelt werden und danach die Schicht mit einem geeigneten Vernetzer behandelt werden, beispielsweise mit der Lösung eines Vernetzers besprüht werden.

Geeignete Vernetzer sollten wasserlöslich oder zumindest in dem besagten wässrigen Lösemittelgemisch löslich sein. Beispiele geeigneter Vernetzer umfassen insbesondere solche, die mindestens 2 vernetzende Gruppen, ausgewählt aus der Gruppe von Aziran-, Oxiran- oder Thiirangruppen aufweisen. Nähere Einzelheiten zu geeigneten Vernetzern sind in unserer noch unveröffentlichten Anmeldung DE 103 49 728.5 offenbart, auf die wir an dieser Stelle ausdrücklich verweisen.

Mittels des erfindungsgemäßen Verfahrens ist eine Passivierungsschicht insbesondere auf einer metallischen Oberfläche aus Zn, Zn-Legierungen, Al oder Al-Legierungen erhältlich. Im Zuge einer derartigen- Behandlung löst sich ein Teil des zu schützenden Metalls auf, und wird gleich darauf wieder in einen oxidischen Film auf der Metalloberfläche eingebaut. Die genaue Struktur und Zusammensetzung der Passivierungsschicht ist uns nicht bekannt. Sie umfasst aber neben den üblichen amorphen Oxiden des Aluminiums oder Zinks sowie ggf. weiterer Metalle auch die Reaktionsprodukte des Polymers sowie gegebenenfalls des Vernetzers und/oder weiterer Komponenten der Formulierung. Die Zusammensetzung der Passivierungsschicht ist im Allgemeinen nicht homogen, sondern die Komponenten scheinen Konzentrationsgradienten aufzuweisen.

Durch die Kombination aus einem hohen Gehalt an COOH-Gruppen und einem niedrigen Neutralisationsgrad werden besonders saure Polymere erhalten, wodurch das oben erwähnte "Anlösen" der Metalloberfläche besonders gut verläuft und ein ausgezeichneter Korrosionsschutz resultiert.

Die Dicke der Passivierungsschicht wird vom Fachmann je nach den gewünschten Eigenschaften der Schicht eingestellt. Im Regelfalle beträgt die Dicke 0,01 bis 3 µm, bevorzugt 0,1 bis 2,5 µm, besonders bevorzugt 0,2 bis 2 µm, ganz besonders bevorzugt 0,3 bis 1,5 µm und beispielsweise 1 bis 2 µm. Die Dicke lässt sich beispielsweise über die Art und Menge der aufgetragenen Komponenten sowie die Einwirkzeit beeinflussen. Weiterhin lässt sie sich durch verfahrenstechnische Parameter beeinflussen, beispielsweise durch Abrakeln oder Abwalzen zu viel aufgebrachter Behandlungslösung.

Die Dicke der Schicht wird dabei durch Differenzwägung vor und nach Einwirkung der erfindungsgemäß eingesetzten Zusammensetzung auf die Metalloberfläche unter der Annahme, dass die Schicht eine spezifische Dichte von 1 kg/l aufweist, ermittelt. Im Folgenden wird unter "Schichtdicke" immer eine derartig ermittelte Größe verstanden, unabhängig davon, welche spezifische Dichte die Schicht tatsächlich aufweist. Diese dünnen Schichten genügen, um einen hervorragenden Korrosionsschutz zu erzielen. Durch solche dünnen Schichten ist die Maßhaltigkeit der passivierten Werkstücke gewährleistet.

Ein weiterer Gegenstand der vorliegenden Anmeldung ist eine metallische Oberfläche, welche die erfindungsgemäße Passivierungsschicht umfasst. Die Passivierungsschicht ist unmittelbar auf der eigentlichen Metalloberfläche aufgebracht. In einer bevorzugten Ausführungsform handelt es sich um ein Bandmetall aus Stahl, welches eine Beschichtung aus Zn oder einer Zn-Legierung umfasst, und auf der eine erfindungsgemäße Passivierungsschicht aufgebracht ist. Es kann sich weiterhin um eine Automobilkarosserie handeln, welche mit der erfindungsgemäßen Passivierungsschicht überzogen ist.

Die metallische Oberfläche mit Passivierungsschicht kann in prinzipiell bekannter Art und Weise mit einer oder mehreren farb- oder effektgebende Lackschichten überlackiert werden. Typische Lacke, deren Zusammensetzung sowie typische wie Schichtfolgen bei mehreren Lackschichten sind dem Fachmann prinzipiell bekannt. Dabei zeigt sich, dass die erfindungsgemäße Passivierung die Lackhaftung verbessert und einen Unterwanderungsschutz erzeugt.

Die Passivierung unter Verwendung der Polymere kann auf verschiedenen Verarbeitungsstufen eingesetzt werden. Sie kann beispielsweise bei einem Stahlhersteller vorgenommen werden. Hierbei kann ein Stahlband in einem kontinuierlichen Verfahren verzinkt und unmittelbar nach der Verzinkung durch Behandeln mit der erfindungsgemäß verwendeten Formulierung passiviert werden. Eine Passivierung in diesem Stadium wird vom Fachmann häufig auch als "Nachbehandlung" bezeichnet.

Hierbei kann es sich nur um eine temporäre Passivierung handeln, die zum Korrosionsschutz bei der Lagerung und beim Transport und/oder bei weiteren Verfahrensschritten dient, aber vor dem Aufbringen des permanenten Korrosionsschutzes wieder entfernt wird. Die saueren Copolymere lassen sich durch eine Reinigung mit wässrigen alkalischen Lösungen wieder von der Oberfläche entfernen.

Es kann sich aber auch um eine permanente Korrosionsschutzbehandlung handeln, die auf dem Band oder dem fertig ausgeformten Werkstück verbleibt und mit zusätzlichen Lackschichten versehen wird. Eine Passivierung in diesem Stadium wird vom Fachmann häufig auch als "Vorbehandlung" bezeichnet.

Die passivierten sowie ggf. lackierten Bleche, Bänder oder anderen metallischen Halbzeuge können zu metallischen Werkstücken, beispielsweise einer Automobilkarosserie, weiter verarbeitet werden. Hierzu ist im Regelfalle mindestens ein Trennschritt und ein Umformschritt erforderlich. Größere Bauteile können danach aus Einzelteilen zusammengefügt werden. Beim Umformen wird die Form des Materials in der Regel in Kontakt mit einem Werkzeug verändert. Es kann sich beispielsweise um Druckumformen, wie Walzen oder Prägen handeln, um Zugdruckumformen, wie Durchziehen, Tiefziehen, Kragenziehen oder Drücken, Zugumformen wie Längen oder Weiten, Biegeumformen wie Biegen, Rundwalzen oder Abkanten sowie Schubumformen wie Verdrehen oder Verschieben handeln.

Durch die Verwendung der Copolymere mit niedrigem Neutralisationsgrad werden Passivierungsschichten erhalten, deren Korrosionsschutzwirkung deutlich höher ist, als bei Verwendung bekannter Homo- oder Copolymere von Acrylsäure und/oder Maleinsäure mit höherem Neutralisationsgrad.

Ein weiterer Vorteil der Behandlung des Metallbandes liegt darin, dass es auch im unlackiertem Zustand vor Weißrostbildung geschützt wird, ohne dass chromathaltige Reagenzien oder Hexafluorometallate eingesetzt werden müssen. Hexafluorometallate wirken nur in komplex zusammengesetzten Mischungen, deren Zusammensetzung während des Prozesses ständig geprüft und durch Nachdosieren von Einzelkomponenten in einem engen Rahmen gehalten werden muss. Das Nachdosieren kann bei den erfindungsgemäßen Verfahren vorteilhaft entfallen.

Ein weiterer Aspekt betrifft die Verwendung der erfindungsgemäßen Copolymere zum Binden von Substraten, insbesondere zum Binden von faserigen und/oder körnigen Substraten. Beispiele für derartige Substrate umfassen Fasern, Schnitzel oder Späne aus verschiedenen natürlichen und/oder künstlichen Materialien.

Zur Substratbindung können bevorzugt Acrylsäure-Maleinsäure-Copolymere mit einem Maleinsäuregehalt von 25 bis 50 Gew. % eingesetzt werden, beispielsweise solche mit 25, 30 oder 50 Gew. % Maleinsäure.

Bevorzugt werden Copolymere mit nicht zu hohem Molekulargewicht M_{w} zur Substratbindung eingesetzt, insbesondere solche mit M_{w} von 3000 bis 500 000 g/mol, bevorzugt 5000 bis 250 000 g/mol, besonders bevorzugt 8000 bis 120 000 g/mol und ganz besonders bevorzugt 10000 bis 100 000 g/mol.

Zum Binden von Substraten werden die Copolymere bevorzugt als Komponenten von Bindemittel-Formulierungen, insbesondere thermisch härtbaren Bindemittel-Formulierungen eingesetzt, welche mindestens
- eines oder mehrere erfindungsgemäße Copolymere,
- einen oder mehrere Vernetzer, sowie
- optional ein geeignetes Lösemittel oder Lösemittelgemisch, und
- optional weitere Komponenten
umfassen.

Das Binden kann beispielsweise so erfolgen, indem man Späne, Schnitzel oder dergleichen mit der Bindemittel-Formulierung mischt, zu Formkörpern, wie beispielsweise Platten, ausformt und aushärtet. Es können auch zunächst Formköper ausgeformt werden und anschließend mit der Bindemittel-Formulierung behandelt und ausgehärtet werden. Ein Beispiel hierfür sind Formkörper aus faserigen Materialien, wie beispielsweise Vliese, Gewebe oder Matten, die unter Verwendung der Bindemittel-Formulierung mechanisch verstärkt werden.

Bei dem Lösemittel der Formulierung handelt es sich bevorzugt um Wasser oder ein wässriges Lösemittelgemisch, insbesondere ein mindestens 50 Gew. % Wasser enthaltendes wässriges Lösungsmittelgemisch wie oben definiert.

Besonders vorteilhaft können ohne weitere Aufbereitung und/oder Reinigung die Lösungen der Copolymere eingesetzt werden, welche unmittelbar aus der Polymerisation resultieren. Sie können gegebenenfalls noch weiter verdünnt werden und/oder es können weitere Komponenten zugegeben werden.

Als Vernetzer eignen sich in prinzipiell bekannter Art und Weise Verbindungen, welche mindestens 2 funktionelle Gruppen aufweisen, die mit den erfindungsgemäßen Copolymeren reagieren können. Sofern ein Lösemittel verwendet wird, sollten sie im Lösemittel bzw. der Lösemittelmischung löslich sein. Bevorzugt sind die eingesetzten Vernetzer wasserlöslich. Im Regelfalle handelt es sich um Vernetzer, die erst bei erhöhter Temperatur mit den Copolymeren reagieren, ohne dass die Erfindung darauf beschränkt sein soll. Selbstverständlich können auch Mischungen mehrerer verschiedener Vernetzer eingesetzt werden.

Beispiele geeigneter Vernetzer umfassen insbesondere Verbindungen, welche mindestens 2 OH-Gruppen aufweisen. Diese reagieren bei erhöhter Temperatur unter Veresterung mit den COOH-Gruppen des erfindungsgemäß verwendeten Copolymers. Als Veresterungskatalysator dienen die H⁺-lonen weiterer COOH-Gruppen. Durch den hohen Gehalt an COOH-Gruppen und den niedrigen Neutralisationsgrad der erfindungsgemäß verwendeten Copolymere verläuft die saure Katalyse vorteilhaft ganz besonders effizient. Es wird ein hoher Vernetzungsgrad auch bei vergleichsweise milden Bedingungen erreicht.

Beispiele von Verbindungen mit mindestens 2 OH-Gruppen umfassen einfache Polyalkohole wie beispielsweise Trimethylolpropan, Pentaerythrit, Neopentylglykol, Glucose, Sorbit, Hexandiol, Glycerin oder Polyvinylalkohol. Weitere Einzelheiten zu Vernetzern auf Basis von Alkanolen sind beispielsweise in WO 97/31059 offenbart.

Die Verbindungen mit mindestens 2 OH-Gruppen können bevorzugt auch noch weitere funktionelle Gruppen umfassen. Zu nennen sind hier insbesondere Aminogruppen. Beispiele derartiger Vernetzer umfassen Di- oder Trialkanolamine wie beispielsweise Diethanolamin, Triethanolamin, Diisopropanolamin, Triisopropanolamin, Methyldiethanolamin, Butyldiethanolamin oder Methyldiisopropanolamin. Besonders bevorzugt ist Triethanolamin.

Der besondere Vorteil derartiger Vernetzer mit zusätzlichen basischen Gruppen ist, dass sie vorteilhaft bereits als Basen im Zuge der Herstellung des Copolymers eingesetzt werden können. Das hergestellte Copolymer enthält dann bereits den ganzen oder zumindest einen Teil des Vernetzers.

Es können auch Vernetzer mit anderen funktionellen Gruppen eingesetzt werden, beispielsweise mit primären Aminogruppen. Beispiele umfassen Polyamine oder auch Aminosäuren wie Lysin. Selbstverständlich können auch Mischungen verschiedener Vernetzer eingesetzt werden.

Die Copolymere und die Vernetzer werden üblicherweise in einem solchen Verhältnis miteinander eingesetzt, dass das Molverhältnis von Carboxylgruppen der eingesetzten erfindungsgemäßen Copolymere und der vernetzenden Gruppen der Vernetzer, also beispielsweise der OH-Gruppen, 20:1 bis 1:1, bevorzugt 8:1 bis 5:1 und besonders bevorzugt 5:1 bis 1,7:1 beträgt.

Falls Vernetzer mit basischen Gruppen eingesetzt werden, hat es sich besonders bewährt, deren Menge so zu begrenzen, dass der Äquivalenzneutralisationsgrad der erfindungsgemäß eingesetzten Polymere auch nach Zugabe des Vernetzers 19,9 mol % bezüglich der COOH-Gruppen nicht überschreitet, auch wenn die Erfindung darauf nicht beschränkt ist. Hierdurch werden Vliese erhalten, deren Festigkeit besonders gut ist.

Die Herstellung der Bindemittel-Formulierungen kann beispielsweise durch einfaches Mischen der Vernetzer mit den Copolymeren oder einer wässrigen Lösung der Copolymeren erfolgen. Als wässrige Lösung eignet sich insbesondere die durch die Polymerisation erhaltene Lösung des Copolymers.

Der Vernetzer kann bereits unmittelbar nach Beendigung der Polymerisation zugegeben werden und diese Mischung zur Verwendung bereit gehalten werden. Er kann aber auch selbstverständlich erst zu einem späteren Zeitpunkt vor der Verwendung zugesetzt werden. Bei der Verwendung von Vernetzern mit Aminogruppen, wie beispielsweise von Triethanolamin, kann die Zugabe besonders vorteilhaft bereits im Zuge der Polymerisation zugegeben werden. Er erfüllt dann eine Doppelfunktion als Vernetzer und als Amin im Zuge der Polymerisation.

Die Bindemittel-Fomulierungen können optional weitere Komponenten umfassen. Art und Menge derartiger Komponenten richten sich nach dem jeweiligen Anwendungszweck.

Beispielsweise können Reaktionsbeschleuniger, insbesondere phosphorhaltige Reaktionsbeschleuniger wie eingesetzt werden. Nähere Einzelheiten zu derartigen Beschleunigern sind in WO 97/21059, Seite 11 offenbart. Vorzugsweise sind keine Phosphor enthaltenden Reaktionsbeschleuniger vorhanden.

Weiterhin können Veresterungskatalysatoren eingesetzt werden, wie beispielsweise Schwefelsäure oder p-Toluolsulfonsäure. Bevorzugt sind keine zusätzlichen sauren Veresterungskatalysatoren vorhanden.

Weitere Komponenten umfassen beispielsweise Farbstoffe, Pigmente, Biozide, Plastifizierungsmittel, Verdickungsmittel oder Haftverbesserer, beispielsweise Alkoxysilane, wie Y-Aminopropyltriethoxysilan, Reduktionsmittel und Umesterungskatalysatoren oder Brandschutzmittel wie Aluminium-Silikate, Aluminium-Hydroxide,oder Borate, ionische oder nichtionische Emulgatoren, Hydrophobierungsmittel wie bspw. Silicone oder Retentionsmittel.

Es können auch noch zusätzliche, von den Polymeren verschiedene Polymere eingesetzt werden. Hierbei können insbesondere Polymere mit sauren Gruppen und ganz besonders COOH-Gruppen umfassende Polymere eingesetzt werden. Beispiele derartiger Polymere umfassen Polyacrylsäuren verschiedenen Molekulargewichtes oder auch Copolymere aus Acrylsäure und anderen saueren Monomeren. Es kann sich hierbei auch um Acrylsäure / Maleinsäure-Copolymere handeln, welche sich lediglich im Hinblick auf den Monomerengehalt von den erfindungsgemäßen Copolymeren unterscheiden. Es können aber auch andere Polymere, wie beispielsweise Dispersionen (Acrylate, Styrol-Butadien-Dispersionen), Epoxid-Harze, PolyurethanHarze oder Melamin/Formaldehydharze eingesetzt werden.

Die Menge derartiger sekundärer Polymerer sollte im Regelfalle 50 Gew. % bezüglich der Menge aller eingesetzten Polymere nicht überschreiten. Bevorzugt beträgt deren Menge 0 bis 30 Gew. %, besonders bevorzugt 0 bis 20 Gew. % und ganz besonders bevorzugt 0 bis 10 Gew. %.

Die Bindemittel-Formulierungen mit den Copolymeren können zur Herstellung von Faservliesen verwendet werden. Beispiele derartiger Materialien umfassen Vliese aus Cellulose, Celluloseacetat, Ester und Ether der Cellulose, Baumwolle, Hanf, Sisal, Jute, Flachs, Kokos- oder Bananenfasern, Kork, tierische Fasern, wie Wolle oder Haare und insbesondere Vliese von synthetischen oder anorganischen Fasern, wie beispielsweise Aramid-, Kohlenstoff-, Polyacrylnitril-, Polyester-, PVC- oder Mineralfasern (Glas- und Steinwolle). Die ungebundenen Faservliese (Rohfaservliese) werden durch die erfindungsgemäße verwendeten Bindemittel-Formulierungen gebunden, d.h. verfestigt bzw. mechanisch verstärkt. Bevorzugt sind Mineralfaservliese und Naturfaservliese.

Zur Verwendung als Bindemittel für Faservliese können die Formulierungen insbesondere die folgenden Zusatzstoffe enthalten: Silikate, Silikone, borhaltige Verbindungen, Gleitmittel, Benetzungsmittel.

Die Bindemittelformulierung wird hierbei durch Beschichten, Sprühen, Imprägnieren oder Tränken auf das Rohfaservlies aufgebracht. Die aufgebrachte Menge wird dabei vorteilhaft so bemessen, dass das Gewichtsverhältnis von Rohfaservlies zu den Komponenten der Bindemittel-Formulierung ohne Berücksichtigung des oder der Lösemittel 25:1 bis 1:1, bevorzugt von 20:1 bis 3:1 beträgt.

Nach dem Aufbringen der Bindemittelformulierung auf das Rohfaservlies erfolgt im allgemeinen eine Trocknung vorzugsweise bei 100°C bis 400°C, insbesondere 130°C bis 280°C, ganz besonders bevorzugt 130 bis 230°C über einen Zeitraum von vorzugsweise 10 Sekunden bis 10 Minuten, insbesondere von 10 Sekunden bis 3 Minuten.

Die erhaltenen, unter Verwendung der Copolymere gebundenen Faservliese weisen im Vergleich zu üblichen carboxylathaltigen Bindemitteln eine erhöhte Biegefestigkeit im trockenen und nassen Zustand auf. Dank der hohen COOH-Dichte haften die Polymere sehr gut auf den Rohvliesen. Aufgrund des niedrigeren Restmonomergehaltes treten bei der Herstellung und Verwendung der Vliese weniger Emissionen auf und die Vliese sind geruchsärmer. Der Auswaschverlust beim Gebrauch im feuchten Zustand ist geringer, was den gebundenen Vliesen eine konstant hohe Festigkeit verleiht.

Die gebundenen Faservliese, insbesondere Mineralfaservliese eignen sich zur Verwendung als Dachbahnen, als Trägermaterialien für Tapeten oder als Inliner bzw. Trägermaterial für Fußbodenbeläge z.B. aus PVC. Bei der Verwendung als Dachbahnen werden die gebundenen Faservliese im allgemeinen mit Bitumen beschichtet.

Die Bindemittel-Formulierungen mit den Copolymere können weiterhin als Bindemittel für Dämmstoffe aus den oben genannten Fasern, insbesondere anorganischen Fasern wie Mineralfasern (Glas- und Steinwolle) verwendet werden. Fasern für Dämmstoffe werden technisch in großem Umfang durch Verspinnen von Schmelzen der entsprechenden mineralischen Rohstoffe hergestellt, wie beispielsweise von EP-A 567 480 offenbart. Der überwiegende Anteil der in den Dämmstoffen verwendeten Mineral- oder Glasfasern hat einen Durchmesser zwischen 0,5 und 20 µm und eine Länge zwischen 0,5 und 10 cm.

Vorteilhaft kann bei dieser Verwendung eine wässrige Lösung eingesetzt werden. Beispiele für zusätzliche Komponenten in der Bindemittel-Formulierung bei dieser Anwendung umfassen Hydrophobierungsmittel wie z.B. Silikonöle, Alkoxysilane wie z.B. 3-Aminopropyltriethoxysilan als Kupplungsagens, lösliche oder emulgierbare Öle als Gleitmittel und Staubbindemittel sowie Benetzungshilfsmittel.

Die wässrige Formulierung wird bevorzugt im Zuge der Herstellung der Dämmstoffe direkt auf die frisch hergestellten, noch heißen Fasern aufgesprüht. Das Wasser verdampft überwiegend und die Bindemittel-Formulierung bleibt im Wesentlichen unausgehärtet als viskoses "high-solid" Material auf den Fasern haften. Diese bindemittelhaltigen Fasermatten werden mittels geeigneter Förderbänder durch einen Härtungsofen transportiert. Dort härtet das Harz bei Ofentemperaturen von ca. 150 bis 350°C aus. Nach dem Härtungsofen werden die Dämmstoffmatten in geeigneter Weise konfektioniert, d.h. in eine für den Endanwender geeignete Form zugeschnitten.

Die Bindemittel-Formulierungen eignen sich auch zur Herstellung von Schleifvliesen, beispielsweise von Topfreinigern oder Topfkratzern auf Basis von gebundenen Faservliesen. Als Fasern werden für diese Anwendung insbesondere natürliche Fasern und synthetische Fasern, wie beispielsweise Polyamide eingesetzt. Im Falle der Topfreiniger oder -kratzer erfolgt die Verfestigung der Faservliese bevorzugt im Sprühverfahren.

Die Bindemittel-Formulierungen eignen sich weiterhin zur Herstellung von Holzwerkstoffen wie Holzspanplatten und Holzfaserplatten, die durch Verleimung von zerteiltem Holz wie z.B. Holzspänen und Holzfasern hergestellt werden können (vgl. Ullmanns Encyclopädie der technischen Chemie, 4. Auflage 1976, Band 12, S. 709-727).

Die Wasserfestigkeit von Holzwerkstoffen kann erhöht werden, indem man den Bindemittel-Formulierungen eine handelsübliche wäßrige Paraffindispersion oder andere Hydrophobierungsmittel zusetzt oder diese Hydrophobierungsmittel vorab oder nachträglich den Fasern, Schnitzeln oder Spänen zusetzt.

Die Herstellung von Spanplatten ist prinzipiell bekannt und wird beispielsweise in H.J. Deppe, K. Ernst Taschenbuch der Spanplattentechnik, 2. Auflage, Verlag Leinfelden 1982, beschrieben. Nähere Einzelheiten zur Herstellung sind auch in WO 97/31059, Seite 13, Zeile 29 bis Seite 14, Zeile 27 offenbart.

Die Bindemittel-Formulierungen eignen sich weiterhin zur Herstellung von Sperrholz-und Tischlerplatten nach den allgemein bekannten Herstellverfahren.

Auch andere Naturfaserstoffe wie Sisal, Jute, Hanf, Flachs, Kenaf, Kokosfasern, Bananenfasern und andere Naturfasern können mit den Bindemittel-Formulierungen, welche die erfindungsgemäßen Copolymere enthalten zu Platten und Formkörpern verarbeitet werden. Die Naturfaserstoffe können auch in Mischungen mit Kunststofffasern, z.B. Polypropylen, Polyethylen, Polyester, Polyamide oder Polyacrylnitril verwendet werden. Diese Kunststofffasern können dabei auch als Cobindemittel neben den Copolymeren fungieren. Der Anteil der Kunststofffasern beträgt dabei bevorzugt weniger als 50 Gew. %, insbesondere weniger als 30 Gew. % und ganz besonders bevorzugt weniger als 10 Gew. %, bezogen auf alle Späne, Schnitzel oder Fasern. Die Verarbeitung der Fasern kann nach dem bei den Holzfaserplatten praktizierten Verfahren erfolgen. Es können aber auch vorgeformte Naturfasermatten mit den Formulierungen imprägniert werden, gegebenenfalls unter Zusatz eines Benetzungshilfsmittels. Die imprägnierten Matten werden dann im bindemittelfeuchten oder vorgetrockneten Zustand z.B. bei Temperaturen zwischen 100 und 250°C und Drücken zwischen 10 und 100 bar zu Platten oder Formteilen verpresst.

Eine weitere Anwendung der Copolymere ist die Verwendung bei der Herstellung von Schleifmaterialien, insbesondere von Schleifpapieren, Schleifgeweben, -vliesen oder Schleifkörpern. Hierbei kommen übliche Schleifgranulate zum Einsatz, beispielsweise auf Basis von Korund, Quarz, Granat, Bimsstein, Tripel, Siliciumcarbid, Schmirgel, Aluminiumoxide, Zirkonoxide, Kieselgur, Sand, Gips, Borcarbid, Boride, Carbide, Nitride, Ceriumoxid oder Silikate. Die Schleifmaterialien können beispielsweise hergestellt werden, indem man zunächst auf den entsprechenden Träger eine wässrige Formulierung des Bindemittels aufbringt, danach die gewählten Schleifgranulate hinzufügt und schließlich noch weitere Mengen der wässrigen Polymerlösung, gegebenenfalls modifiziert mit z.B. Dispersionen als sogenannten Deckbinder hinzufügt.

Eine weitere Verwendung der Copolymere ist die Verwendung für die Herstellung von Filtermaterialien, insbesondere von Filterpapieren oder Filtergeweben. Gewebematerialien können beispielsweise Cellulose, Baumwolle, Polyester, Polyamid, PE, PP, Glasvliese, Glaswolle sein. Das Auftragen der erfindungsgemäß zu verwendenden Bindemittel-Formulierung auf die Filtermaterialien, also u.a. auf Filterpapier oder Filtergewebe erfolgt vorzugsweise durch Tränken oder Aufsprühen. Es empfiehlt sich, diese danach noch 0,1 bis 60 Minuten lang, insbesondere 1 bis 60 Minuten lang bei Temperaturen von 100 bis 250°C, insbesondere von 110 bis 220°C zu tempern, d.h. zu härten.

Eine weitere Verwendung der Copolymere ist die Verwendung als Bindemittel für Kork, z.B. Korkvliese, -matten, -blöcke oder -platten.

Die folgenden Beispiele sollen die Erfindung näher illustrieren:

### Messmethoden:

Die K-Werte wurden nach nach H. Fikentscher, Cellulose-Chemie, Bd. 13, S. 58-64 und 71-74 (1932) in 1 Gew.-%iger wäßriger Lösung bei 25°C gemessen.
M_{w}-Werte wurden mittels Gelpermeationschromatographie bestimmt.

### Teil A: Herstellung der Copolymere

### A1) Polymere für den Korrosionsschutz

### Beispiel 1:

In einem Rührtopf mit Blattrührer und Innenthermometer werden 121,6 g Maleinsäureanhydrid in 190 g deionisiertem Wasser gelöst und eine Stunde unter Stickstoffbegasung bei leichtem Rückfluß gerührt. 5,62 mg Eisen(II)sulfat-Heptahydrat werden auf einmal zugefügt und über 5 Minuten wird Zulauf 1 bestehend aus 86,2 g Triethanolamin in 50,0 g deionisiertem Wasser zudosiert. Dies entsprich einem Äquivalenzneutralisationsgrad von 6,8 mol %. Anschließend wird Zulauf 2 bestehend aus 431,3 g Acrylsäure in 336,0 g entionisiertem Wasser in 4 h und Zulauf 3 bestehend aus 57,6 g Wasserstoffperoxid (30%ig) und 112,0 g entionisiertem Wasser in 5 h zugegeben. Nach beendeter Zugabe wird weitere 2 h unter Rückflussbedingungen gerührt und auf Raumtemperatur abgekühlt.

Man erhält eine leicht gelbliche, klare Polymerlösung mit einem Feststoffgehalt von 44,8%, einem K-Wert von und einem Restmaleinsäuregehalt (bezogen auf das erhaltene, feste Copolymer) von 0,27 %.

Die Versuchsbedingungen und die erhaltenen Ergebnisse sind in Tabelle 1 zusammengefasst.

### Beispiele 2 bis 9, Vergleichsbeispiele 1 bis 5

Nach der gleichen Arbeitsvorschrift wie in Beispiel 1 wurden durch Variation der Menge der Art und Menge der Base, Veränderung der Mengen und Art der Monomere Copolymere hergestellt. Die Versuchsbedingungen und die erhaltenen Ergebnisse sind in Tabelle 1 zusammengefasst.

### Beispiel 10:

In einem 160 I fassenden Kessel mit Blattrührer und Innenthermometer werden 8,067 kg Maleinsäureanhydrid und 4,007 kg Vinylphosphonsäure (95%ig) in 12 kg deionisiertem Wasser gelöst und eine Stunde unter Stickstoffbegasung bei leichtem Rückfluß gerührt. 46,639 g Eisen(II)sulfat-Heptahydrat in 1,49 kg deionisiertem Wasser werden auf einmal zugefügt und über 5 Minuten wird Zulauf 1 bestehend aus 5,732 kg Triethanolamin in 5,0 kg deionisiertem Wasser zudosiert. Dies entspricht einem Äquivalenzneutralisationsgrad (bezogen auf Gesamt-COOH) von 6,8 mol.%. Anschließend wird Zulauf 2 bestehend aus 28,607 kg Acrylsäure in 5 h und Zulauf 3 bestehend aus 2,455 kg Natriumperoxodisulfat und 32,6 kg entionisiertem Wasser in 6 h zugegeben. Nach beendeter Zugabe wird Zulauf 2 mit 5 kg entionisiertem Wasser in den Kessel gespült, weitere 2 h unter Rückflussbedingungen gerührt und auf Raumtemperatur abgekühlt.

Man erhält eine klare Polymerlösung mit einem Feststoffgehalt von 46,2%, einem K-Wert von 19,7 und einem Restmaleinsäuregehalt (bezogen auf das erhaltene, feste Copolymer) von 0,98 %.

Die Versuchsbedingungen und die erhaltenen Ergebnisse sind in Tabelle 1 zusammengefasst.

### Beispiel 11:

In einem 160 I fassenden Kessel mit Blattrührer und Innenthermometer werden 7,161 kg Maleinsäureanhydrid und 8,951 kg Vinylphosphonsäure (95%ig) in 12 kg deionisiertem Wasser gelöst und eine Stunde unter Stickstoffbegasung bei leichtem Rückfluß gerührt. 41,4 g Eisen(II)sulfat-Heptahydrat in 740 g deionisiertem Wasser werden auf einmal zugefügt und über 5 Minuten wird Zulauf 1 bestehend aus 5,088 kg Triethanolamin in 5,0 kg deionisiertem Wasser zudosiert. Dies entspricht einem Äquivalenzneutralisationsgrad (bezogen auf Gesamt-COOH) von 6,8 mol.%. Anschließend wird Zulauf 2 bestehend aus 25,322 kg Acrylsäure in 5 h und Zulauf 3 bestehend aus 2,497 kg Natriumperoxodisulfat und 33,2 kg entionisiertem Wasser in 6 h zugegeben. Nach beendeter Zugabe wird Zulauf 2 mit 5 kg entionisiertem Wasser in den Kessel gespült, weitere 2 h unter Rückflussbedingungen gerührt und auf Raumtemperatur abgekühlt.

Man erhält eine klare Polymerlösung mit einem Feststoffgehalt von 46,4%, einem K-Wert von 18,4 und einem Restmaleinsäuregehalt (bezogen auf das erhaltene, feste Copolymer) von 2,18 %.

Die Versuchsbedingungen und die erhaltenen Ergebnisse sind in Tabelle 1 zusammengefasst.

### A2) Polymere für die Faserbindung

### Beispiel 12:

In einem Reaktor mit Rührer, Stickstoffzuführung, Rückflusskühler und Dosiervorrichtung wurden 336,9 g destilliertes Wasser, 6,7 mg FeSO₄ x 7 H₂O und 150,4 g Maleinsäureanhydrid unter Stickstoffzufuhr und Rühren auf 80°C Innentemperatur erhitzt. Dann wurde kontinuierlich innerhalb von 15 min 218,6 g Triethanolamin zudosiert und dabei auf 99°C Innentemperatur erhitzt. Dann wurden kontinuierlich in zwei getrennten Zuläufen in 4 h ein Gemisch aus 550,5 g Acrylsäure und 383,0 g destilliertem Wasser und in 5 h ein Gemisch aus 36,46 g einer 30 gew.-%igen wässrigen Wasserstoffperoxidlösung und 42,82 g destilliertem Wasser zugegeben. Nach zweistündigem Nachrühren bei 99°C wurde abgekühlt.

Zur Verwendung für die Faserbindung wurden 175,6 g destilliertes Wasser zugegeben. Es wurde eine Polymerlösung mit einem Feststoffgehalt von 49,4 Gew.-%, einem pH-Wert von 3,12 und einem K-Wert von 35,6 erhalten.

Die Daten sind in Tabelle 2 zusammengestellt.

### Beispiel 13:

In der Apparatur gemäß Beispiel 12 wurden 267,6 g destilliertes Wasser, 6,7 mg Fe-SO₄ x 7 H₂O und 171,1 g Maleinsäureanhydrid unter Stickstoffzufuhr und Rühren auf 80°C Innentemperatur erhitzt. Dann wird kontinuierlich innerhalb von 15 min 202,5 g Triethanolamin zudosiert und dabei auf 99°C Innentemperatur erhitzt. Dann wurden kontinuierlich in zwei getrennten Zuläufen in 4 h ein Gemisch aus 472,5 g Acrylsäure und 236,4 g destilliertem Wasser und in 5 h ein Gemisch aus 67,5 g einer 30 gew.-%igen wäßrigen Wasserstoffperoxidlösung und 135,0 g destilliertem Wasser zugegeben. Nach zweistündigem Nachrühren bei 99°C wurde abgekühlt.

Zur Verwendung für die Faserbindung wurden 202,5 g destilliertes Wasser zugegeben. Es wurde eine Polymerlösung mit einem Feststoffgehalt von 49,4 Gew.-%, einem pH-Wert von 3,04 und einem K-Wert von 25,5 erhalten.

### Beispiel 14:

In der Apparatur gemäß Beispiel 12 wurden 267,6 g destilliertes Wasser, 6,7 mg Fe-SO₄ x 7 H₂O und 171,1 g Maleinsäureanhydrid unter Stickstoffzufuhr und Rühren auf 80°C Innentemperatur erhitzt. Dann wird kontinuierlich innerhalb von 15 min 135,0 g Triethanolamin zudosiert und dabei auf 99°C Innentemperatur erhitzt. Dann wurden kontinuierlich in zwei getrennten Zuläufen in 4 h ein Gemisch aus 472,5 g Acrylsäure und 236,4 g destilliertem Wasser und in 5 h ein Gemisch aus 67,5 g einer 30 gew.-%igen wäßrigen Wasserstoffperoxidlösung und 135,0 g destilliertem Wasser zugegeben. Nach zweistündigem Nachrühren bei 99°C wurde abgekühlt.

Zur Verwendung für die Faserbindung wurde ein Gemisch aus 202,5 g destilliertem Wasser und 67,5 g Triethanolamin als Vernetzer zugegeben. Es wurde eine Polymerlösung mit einem Feststoffgehalt von 49,3 Gew.-%, einem pH-Wert von 3,10 und einem K-Wert von 26,1 erhalten.

### Beispiel 15:

In der Apparatur gemäß Beispiel 12 wurden 267,6 g destilliertes Wasser, 6,7 mg Fe-SO₄ x 7 H₂O und 171,1 g Maleinsäureanhydrid unter Stickstoffzufuhr und Rühren auf 80°C Innentemperatur erhitzt. Dann wird kontinuierlich innerhalb von 15 min 67,5 g Triethanolamin zudosiert und dabei auf 99°C Innentemperatur erhitzt. Dann wurden kontinuierlich in zwei getrennten Zuläufen in 4 h ein Gemisch aus 472,5 g Acrylsäure und 236,4 g destilliertem Wasser und in 5 h ein Gemisch aus 67,5 g einer 30 gew.-%igen wäßrigen Wasserstoffperoxidlösung und 135,0 g destilliertem Wasser zugegeben. Nach zweistündigem Nachrühren bei 99°C wurde abgekühlt.

Zur Verwendung für die Faserbindung wurde ein Gemisch aus 202,5 g destilliertem Wasser und 135,0 g Triethanolamin als Vernetzer zugegeben. Es wurde eine Polymerlösung mit einem Feststoffgehalt von 49,4 Gew.-%, einem pH-Wert von 3,06 und einem K-Wert von 28,7 erhalten.

### Beispiel 16:

In der Apparatur gemäß Beispiel 12 wurden 267,6 g destilliertes Wasser, 6,7 mg Fe-SO₄ x 7 H₂O und 171,1 g Maleinsäureanhydrid unter Stickstoffzufuhr und Rühren auf 80°C Innentemperatur erhitzt. Dann wird kontinuierlich innerhalb von 15 min 50,6 g Triethanolamin zudosiert und dabei auf 99°C Innentemperatur erhitzt. Dann wurden kontinuierlich in zwei getrennten Zuläufen in 4 h ein Gemisch aus 472,5 g Acrylsäure und 236,4 g destilliertem Wasser und in 5 h ein Gemisch aus 67,5 g einer 30 gew.-%igen wäßrigen Wasserstoffperoxidlösung und 135,0 g destilliertem Wasser zugegeben. Nach zweistündigem Nachrühren bei 99°C wurde abgekühlt.

Zur Verwendung für die Faserbindung wurde ein Gemisch aus 202,5 g destilliertem Wasser und 151,9 g Triethanolamin als Vernetzer zugegeben. Es wurde eine Polymerlösung mit einem Feststoffgehalt von 49,1 Gew.-%, einem pH-Wert von 3,03 und einem K-Wert von 30,8 erhalten.

### Beispiel 17:

In der Apparatur gemäß Beispiel 12 wurden 267,6 g destilliertes Wasser, 6,7 mg Fe-SO₄ x 7 H₂O und 228,1 g Maleinsäureanhydrid unter Stickstoffzufuhr und Rühren auf 80°C Innentemperatur erhitzt. Dann wird kontinuierlich innerhalb von 15 min 202,5 g Triethanolamin zudosiert und dabei auf 99°C Innentemperatur erhitzt. Dann wurden kontinuierlich in zwei getrennten Zuläufen in 4 h ein Gemisch aus 405,0 g Acrylsäure und 236,4 g destilliertem Wasser und in 5 h ein Gemisch aus 67,5 g einer 30 gew.-%igen wäßrigen Wasserstoffperoxidlösung und 135,0 g destilliertem Wasser zugegeben. Nach zweistündigem Nachrühren bei 99°C wurde abgekühlt.

Zur Verwendung für die Faserbindung wurde 202,5 g destilliertes Wasser zugegeben. Es wurde eine Polymerlösung mit einem Feststoffgehalt von 49,1 Gew.-%, einem pH-Wert von 2,95 und einem K-Wert von 18,6 erhalten.

### Beispiel 18:

In der Apparatur gemäß Beispiel 12 wurden 237,0 g destilliertes Wasser, 6,7 mg Fe-SO₄ x 7 H₂O und 276,9 g Maleinsäureanhydrid unter Stickstoffzufuhr und Rühren auf 80°C Innentemperatur erhitzt. Dann wird kontinuierlich innerhalb von 15 min 199,5 g Triethanolamin zudosiert und dabei auf 99°C Innentemperatur erhitzt. Dann wurden kontinuierlich in zwei getrennten Zuläufen in 4,5 h ein Gemisch aus 335,4 g Acrylsäure und 236,7 g destilliertem Wasser und in 6 h 154,7 g einer 30 gew.-%igen wäßrigen Wasserstoffperoxidlösung zugegeben. Nach zweistündigem Nachrühren bei 99°C wurde abgekühlt.

Zur Verwendung für die Faserbindung wurden 284,9 g destilliertes Wasser zugegeben. Es wurde eine Polymerlösung mit einem Feststoffgehalt von 48,2 Gew.-%, einem pH-Wert von 2,80 und einem K-Wert von 14,3 erhalten.

### Beispiel 19:

In der Apparatur gemäß Beispiel 12 wurden 237,0 g destilliertes Wasser, 6,7 mg Fe-SO₄ x 7 H₂O und 276,9 g Maleinsäureanhydrid unter Stickstoffzufuhr und Rühren auf 80°C Innentemperatur erhitzt. Dann wird kontinuierlich innerhalb von 15 min 99,8 g Triethanolamin zudosiert und dabei auf 99°C Innentemperatur erhitzt. Dann wurden kontinuierlich in zwei getrennten Zuläufen in 4,5 h ein Gemisch aus 335,4g Acrylsäure und 236,7 g destilliertem Wasser und in 6 h 154,7 g einer 30 gew.-%igen wäßrigen Wasserstoffperoxidlösung zugegeben. Nach zweistündigem Nachrühren bei 99°C wurde abgekühlt.

Zur Verwendung für die Faserbindung wurde ein Gemisch aus 284,9 g destilliertem Wasser und 99,8 g Triethanolamin als Vernetzer zugegeben. Es wurde eine Polymerlösung mit einem Feststoffgehalt von 48,1 Gew.-%, einem pH-Wert von 2,80 und einem K-Wert von 14,1 erhalten.

### Beispiel 20:

In der Apparatur gemäß Beispiel 12 wurden 237,0 g destilliertes Wasser, 6,7 mg Fe-SO₄ x 7 H₂O und 276,9 g Maleinsäureanhydrid unter Stickstoffzufuhr und Rühren auf 80°C Innentemperatur erhitzt. Dann wird kontinuierlich innerhalb von 15 min 49,9 g Triethanolamin zudosiert und dabei auf 99°C Innentemperatur erhitzt. Dann wurden kontinuierlich in zwei getrennten Zuläufen in 4,5 h ein Gemisch aus 335,4g Acrylsäure und 236,7 g destilliertem Wasser und in 6 h 154,7 g einer 30 gew.-%igen wäßrigen Wasserstoffperoxidlösung zugegeben. Nach zweistündigem Nachrühren bei 99°C wurde abgekühlt.

Zur Verwendung für die Faserbindung wurde ein Gemisch aus 284,9 g destilliertem Wasser und 149,6 g Triethanolamin als Vernetzer zugegeben. Es wurde eine Polymerlösung mit einem Feststoffgehalt von 48,0 Gew.-%, einem pH-Wert von 2,80 und einem K-Wert von 15,6 erhalten.

### Vergleichsbeispiel 6:

### Keine Base während der Polymerisation

In einem Druckeaktor mit Rührer, Stickstoffzuführung und Dosiervorrichtung wurden 336,9 g destilliertes Wasser, 6,7 mg FeSO₄ x 7 H₂O und 150,4 g Maleinsäureanhydrid unter Stickstoffzufuhr und Rühren auf 110°C Innentemperatur erhitzt. Dann wurden kontinuierlich in zwei getrennten Zuläufen in 4 h ein Gemisch aus 550,5 g Acrylsäure und 383,0 g destilliertem Wasser und in 5 h ein Gemisch aus 36,46 g einer 30 Gew.-%igen wäßrigen Wasserstoffperoxidlösung und 42,82 g destilliertem Wasser zugegeben. Nach zweistündigem Nachrühren bei 110°C wurde abgekühlt.
Zur Verwendung für die Faserbindung wurden 175,6 g destilliertes Wasser sowie 218,6 g Triethanolamin als Vernetzer zugegeben. Es wurde eine Polymerlösung mit einem Feststoffgehalt von 49,6 Gew.-%, einem pH-Wert von 3,01 und einem K-Wert von 30,6 erhalten.

### Vergleichsbeispiel 7:

### Keine Base während der Polymerisation

In einem Reaktor mit Rührer, Stickstoffzuführung, Rückflußkühler und Dosiervorrichtung wurden 267,6 g destilliertes Wasser, 6,7 mg FeSO₄ x 7 H₂O und 171,1 g Maleinsäureanhydrid unter Stickstoffzufuhr und Rühren auf 99°C Innentemperatur erhitzt. Dann wurden kontinuierlich in zwei getrennten Zuläufen in 4 h ein Gemisch aus 472,5 g Acrylsäure und 236,4 g destilliertem Wasser und in 5 h ein Gemisch aus 67,5 g einer 30 gew.-%igen wäßrigen Wasserstoffperoxidlösung und 135,0 destilliertem Wasser zugegeben. Nach zweistündigem Nachrühren bei 99°C wurde abgekühlt.
Zur Verwendung für die Faserbindung wurde ein Gemisch aus 202,5 g destilliertem Wasser und 202,5 g Triethanolamin als Vernetzer zugegeben. Es wurde eine Polymerlösung mit einem Feststoffgehalt von 49,2 Gew.-%, einem pH-Wert von 2,83 und einem K-Wert von 28,4 erhalten.

### Vergleichsbeispiel 8:

### Keine Base während der Polymerisation

In einem Druckeaktor mit Rührer, Stickstoffzuführung und Dosiervorrichtung wurden 267,6 g destilliertes Wasser, 6,7 mg FeSO₄ x 7 H₂O und 171,1 g Maleinsäureanhydrid unter Stickstoffzufuhr und Rühren auf 135°C Innentemperatur erhitzt. Dann wurden kontinuierlich in zwei getrennten Zuläufen in 4 h ein Gemisch aus 472,5 g Acrylsäure und 236,4 g destilliertem Wasser und in 5 h ein Gemisch aus 67,5 g einer 30 gew.-%igen wäßrigen Wasserstoffperoxidlösung und 135,0 destilliertem Wasser zugegeben. Nach zweistündigem Nachrühren bei 135°C wurde abgekühlt.
Zur Verwendung für die Faserbindung wurde ein Gemisch aus 202,5 g destilliertem Wasser und 202,5 g Triethanolamin als Vernetzer zugegeben. Es wurde eine Polymerlösung mit einem Feststoffgehalt von 48,2 Gew.-%, einem pH-Wert von 2,67 und einem K-Wert von 15,0 erhalten.

### Vergleichsbeispiel 9:

### Keine Base während der Polymerisation

In einem Reaktor mit Rührer, Stickstoffzuführung, Rückflußkühler und Dosiervorrichtung wurden 237,0g destilliertes Wasser, 6,7 mg FeSO₄ x 7 H₂O und 276,9 g Maleinsäureanhydrid unter Stickstoffzufuhr und Rühren auf 99°C Innentemperatur erhitzt. Dann wurden kontinuierlich in zwei getrennten Zuläufen in 4,5 h ein Gemisch aus 335,4 g Acrylsäure und 236,7 g destilliertem Wasser und in 6 h 154,7 g einer 30 gew.-%igen wäßrigen Wasserstoffperoxidlösung. Nach zweistündigem Nachrühren bei 99°C wurde abgekühlt.

Zur Verwendung für die Faserbindung wurde ein Gemisch aus 284,9 g destilliertem Wasser und 199,5 g Triethanolamin als Vernetzer zugegeben. Es wurde eine Polymerlösung mit einem Feststoffgehalt von 47,1 Gew.-%, einem pH-Wert von 2,20 und einem K-Wert von 13,8 erhalten.

### Vergleichsbeispiel 10:

### Keine Base während der Polymerisation

In einem Druckreaktor mit Rührer, Stickstoffzuführung und Dosiervorrichtung wurden 237,0g destilliertes Wasser, 6,7 mg FeSO₄ x 7 H₂O und 276,9 g Maleinsäureanhydrid unter Stickstoffzufuhr und Rühren auf 130°C Innentemperatur erhitzt. Dann wurden kontinuierlich in zwei getrennten Zuläufen in 4,5 h ein Gemisch aus 335,4 g Acrylsäure und 236,7 g destilliertem Wasser und in 6 h 154,7 g einer 30 gew.-%igen wäßrigen Wasserstoffperoxidlösung. Nach zweistündigem Nachrühren bei 130°C wurde abgekühlt.

Zur Verwendung für die Faserbindung wurde ein Gemisch aus 284,9 g destilliertem Wasser und 199,5 g Triethanolamin als Vernetzer zugegeben. Es wurde eine Polymerlösung mit einem Feststoffgehalt von 47,3 Gew.-%, einem pH-Wert von 2,18 und einem K-Wert von 10,8 erhalten.

### Vergleichsbeispiel 11:

Wasser, 6,7 mg FeSO₄ × 7 H₂O und 171,1 g Maleinsäureanhydrid unter Stickstoffzufuhr und Rühren auf 80°C Innentemperatur erhitzt. Dann wird kontinuierlich innerhalb von 15 min 202,5 g Triethanolamin zudosiert und dabei auf 99°C Innentemperatur erhitzt. Dann wurden kontinuierlich in zwei getrennten Zuläufen in 4 h ein Gemisch aus 472,5 g Acrylsäure und 236,4 g destilliertem Wasser und in 5 h ein Gemisch aus 67,5 g einer 30 gew.-%igen wäßrigen Wasserstoffperoxidlösung und 135,0 g destilliertem Wasser zugegeben. Nach zweistündigem Nachrühren bei 99°C wurde abgekühlt.
Zur Verwendung für die Faserbindung wurden und 202,5 g destilliertes Wasser zugegeben. Es wurde eine Polymerlösung mit einem Feststoffgehalt von 49,4 Gew.-%, einem pH-Wert von 3,06 und einem K-Wert von 25,6 erhalten. Anschließend wurden 297,6 g Triethanolamin und 270,0 g destilliertes Wasser zugegeben (pH: 4,3).

### Vergleichsbeispiel 12:

### Base NaOH

In einem Druckeaktor mit Rührer, Stickstoffzuführung und Dosiervorrichtung wurden 439,0 g destilliertes Wasser, 6,7 mg FeSO₄ x 7 H₂O und 154,7 g Maleinsäureanhydrid unter Stickstoffzufuhr und Rühren vorgelegt, anschließend 230,5 g Natronlauge (50 Gew %) zudosiert, und danach auf 115°C Innentemperatur erhitzt. Dann wurden kontinuierlich in zwei getrennten Zuläufen in 3,5 h ein Gemisch aus 468,4 g Acrylsäure und 311,1 g destilliertem Wasser und in 3,5 h 27,5 g einer 50 gew.-%igen wässrigen Wasserstoffperoxidlösung zugegeben. Nach Zugabe von weiteren 9,2 g einer 50-Gew.-%-igen wässrigen Wasserstoffperoxidlösung innerhalb von 1,0 h bei 115°C wurde auf 80°C abgekühlt und 397,7 g 50-Gew%-ige Natronlauge innerhalb von 2 h zugegeben.

Es wurde eine Polymerlösung mit einem Feststoffgehalt von 41,2 Gew.-%, einem pH-Wert von 7.7 und einem K-Wert von 60,2 erhalten. Es wurden 195,2 g Triethanolamin als Vernetzer zugesetzt.

### Teil B: Anwendungstechnische Prüfung der erfindungsgemäßen Polymere

### B1) Verwendung zum Korrosionsschutz

Für die Beispiele und Vergleichsbeispiele wurden Prüfbleche aus verzinktem Stahl (20 µm einseitige Zinkauflage) eingesetzt, und zwar jeweils ein alkalisch verzinktes Blech und ein heißverzinktes Blech.

### In den Beispielen wurde folgende Blech-Vorbehandlung gewählt:

Unpassivierte alkalisch verzinkte Stahlbleche wurden 10 s in eine Reinigungslösung aus 0,5% HCl und 0,1% eines Alkylphenolethoxylats mit 10 Ethylenoxid-Einheiten getaucht, sofort mit Wasser abgespült und anschließend durch Abblasen getrocknet. Unpassivierte heißverzinkte Stahlbleche werden in eine alkalische Entfettung für 120 sec bei 50°C getaucht, sofort mit VE-Wasser abgespült und durch Abblasen getrocknet.

### Ansetzen der Zusammensetzungen zur Passivierung:

Jeweils 5%ige wässrige Lösungen des jeweils eingesetzten Polymere wurden homogenisiert und in ein Tauchbad gefüllt. Die vorgereinigten Bleche wurden 30 s in die auf 50°C temperierte Lösung eingetaucht und bei Raumtemperatur getrocknet. Abschließend wurden die Ränder der passivierten Bleche abgeklebt, um Randeffekte auszuschließen.

Die Bleche wurden wie weiter unten beschrieben passiviert.

Die Dicke der Passivierungsschicht wurde durch Differenzwägung vor und nach Einwirken der erfindungsgemäß eingesetzten Zusammensetzung auf die Metalloberfläche und unter der Annahme, dass die Schicht eine spezifische Dichte von 1 kg/l aufweist, ermittelt. Im Folgenden wird unter "Schichtdicke" immer eine derartig ermittelte Größe verstanden, unabhängig davon, welche spezifische Dichte die Schicht tatsächlich aufweist.

Ein Teil der Bleche wird mit einem handelsüblichen Lack lackiert. Die lackierten Bleche werden mit dem Gitterschnitt-Test gemäß DIN EN ISO 2409 auf Lackhaftung geprüft. Die Lackhaftung entspricht der Haftung auf phosphatierten Blechen und ist besser als die von nicht passivierten Blechen. Nach Trocknen des Lacks wird dieser bis auf das Metall geritzt und einem Salzsprühtest nach DIN 50021 ausgesetzt. Der Vergleich mit nicht passivierten und mit phosphatierten Blechen zeigt, dass die erfindungsgemäße Passivierung die Unterwanderung um mehr als 50% reduziert.

Der Grad der Korrosion wurde dabei Anhand des Aussehens der Bleche beurteilt. Hierzu wurde das Aussehen der behandelten Bleche jeweils nach 28 h und nach 50 h Salzsprühtest mit den vorgegebenen Schadbildern in der DIN 50021 verglichen und gemäß der von der Norm vorgegebenen Bewertung von 10 bis 1 versehen. 10 steht dabei für das beste Ergebnis, während mit abnehmender Bewertung das Ausmaß der Korrosion zunimmt. 1 steht für das schlechteste Ergebnis.

Die Ergebnisse der Versuche und Vergleichsversuche sind in Tabelle 3 zusammengefasst.

### B2) Verwendung zur Bindung von Glasfaservliesen

### Herstellen der Formulierungen:

Für die anwendungstechnischen Versuche wurden die in den Beispielen 8 bis 16 sowie Vergleichsbeispiele 6 bis 12 erhaltenen Lösungen der Copolymere wie bereits dort beschrieben mit destilliertem Wasser jeweils auf eine Konzentration von 49 - 50 Gew. % Feststoffgehalt eingestellt und wurde gegebenenfalls zusätzliches Triethanolamin als Vernetzer zugegeben, so dass die Gesamtmenge von Triethanolamin in der Lösung jeweils 30 Gew. % bezüglich des Polymers betrug. Bereits im Zuge der Polymerisation verwendetes Triethanolamin wurde berücksichtigt. Weiterhin wurden ca. 1 Gew. % γ-Aminopropyltriethoxysilan bezüglich der Summe aller Komponenten außer dem Lösemittel in die Lösung eingerührt.
Die pH-Werte der Formulierungen sind in Tabelle 3 angegeben.

### Behandlung der Vliese:

Es wurde ein unbehandeltes Glasfaservlies (ca. 50 g/m²) von 32 cm Länge und 28 cm Breite eingesetzt.

Die Vliese werden in Längsrichtung über ein Endlos-PES-Siebband zunächst durch eine 20%-ige Bindemittelflotte und anschließend über eine Absaugvorrichtung geführt. Die Bandgeschwindigkeit beträgt 0,6 m/min. Über die verstellbare Stärke der Absaugung erfolgt die Dosierung des Nassauftrages. Im Falle eines Nassauftrages von ca. 100% erhält man mit einer Flottenkonzentration des Bindemittels von 20% einen Trockenauftrag von 20% ⁺/₋2%. Die Aushärtung der imprägnierten Vliese erfolgt für 2 Minuten bei 180°C auf einem PES-Store als Träger in einem Mathis-Trockner.

### Test der Biegesteifigkeit:

### Vorbereitung der Prüflinge:

Aus dem Vlies werden 6 Prüflinge für die Prüfung der Biegesteifigkeit in Längsrichtung ausgeschnitten. Die Größe der Vliese beträgt für die Prüfung der Biegesteifigkeit 70x30mm.

### Durchführung der Prüfungen:

Der Prüfstreifen wird in einer Klemmvorrichtung befestigt und in einem Abstand von 10 mm über eine Halterung in einem Winkel von 20° gebogen. Die Höhe des Prüfstreifens beträgt 30 mm. Die gemessene Kraft stellt die Biegesteifigkeit dar. Insgesamt werden 6 Prüflinge jeweils von der Vorder- und Rückseite vermessen und ein Mittelwert bestimmt.

Die Ergebnisse der Prüfungen sind in Tabelle 4 dargestellt.

**Tabelle 1: Versuchsbedingungen und Ergebnisse der Beispiele und Vergleichsbeispiele,**

| Nr. | AS [Gew.%] | MS [Gew.%] | Weitere Comonmere | | Im Zuge der Polymerisation zugegebene Base | Aquivalenzneutralisa tionsgrad während Polymerisation [mol%] | T [°C] | Restgehalt Maleinsäure [Gew. %] | K-Wert |
|---|---|---|---|---|---|---|---|---|---|
| | | | Art | Menge [Gew. %] | | | | | |
| Beispiel 1 | 75 | 25 | - | - | TEA | 6,8 | 98 | 0,3 | 30,8 |
| Beispiel 2 | 75 | 25 | - | - | DEA | 6,8 | 98 | 0,7 | 26,5 |
| Beispiel 3 | 75 | 25 | - | - | EA | 6,8 | 98 | 0,7 | 43,8 |
| Beispiel 4 | 75 | 25 | - | - | TEA | 3,4 | 98 | 2,0 | 32,4 |
| Beispiel 5 | 65 | 35 | - | - | TEA | 6,8 | 98 | 1,1 | 21,2 |
| Beispiel 6 | 71 | 24 | Hydroxyethylacrylat | 5 | TEA | 6,8 | 98 | 0,3 | 44,4 |
| Beispiel 7 | 71 | 24 | Vinylphosphonsäure | 5 | TEA | 6,4 | 98 | 1,3 | 41,2 |
| Beispiel 8 | 68 | 23 | Vinylphosphonsäure | 9 | TEA | 6,8 | 99 | 0,05 | 18,0 |
| Beispiel 9 | 59,86 | 20,04 | Vinylphosphonsäure | 20,1 | DMEA | 6,8 | 99 | 0,61 | 17,5 |
| Beispiel 10 | 68 | 23 | Vinylphosphonsäure | 9 | TEA | 6,8 | 99 | 0,98 | 19,7 |
| Beispiel 11 | 59,86 | 20,04 | Vinylphosphonsäure | 20,1 | TEA | 6,9 | 99 | 2,18 | 18,4 |
| Vergleichsbeispiel 1 | 75 | 25 | - | - | - | 0 | 98 | 16,7 | 26,5 |
| Vergleichsbeispiel 2 | 75 | 25 | - | - | TEA | 2 | 98 | 8,1 | 29,2 |
| Vergleichsbeispiel 3 | 75 | 25 | - | - | TEA | 60 | 98 | 8,4 | 29,1 |
| Vergleichsbeispiel4 | 75 | 25 | - | - | NaOH | 6,8 | 98 | 1,0 | 42,7 |
| Vergleichsbeispiel 5 | 75 | 25 | - | - | NH₃ | 6,8 | 98 | 1,2 | 43,8 |

Erläuterung der Abkürzungen: AS: Acrylsäure; MS: Maleinsäure, EA: Ethanolamin, DEA: Diethanolamin, TEA: Triethanolamin

**Tabelle 2: Versuchsbedingungen und Ergebnisse der Beispiele und Vergleichsbeispiele (n.b.: nicht bestimmt)**

| Nr. | AS [Gew.%] | MS [Gew. %] | Im Zuge der Polymerisation zugegebene Base | Aquivalenzneutralisationsgrad während Polymerisation [mol%] | T [°C] | Restgehalt Maleinsäure [Gew. %] | K-Wert | M_{w} [g/mol] |
|---|---|---|---|---|---|---|---|---|
| Beispiel 12 | 75 | 25 | TEA | 13 | 99 | 0,1 | 35,6 | 100 000 |
| Beispiel 13 | 70 | 30 | TEA | 12,7 | 99 | < 0,1 | 25,5 | n.b. |
| Beispiel 14 | 70 | 30 | TEA | 8,5 | 99 | < 0,1 | 26,1 | 44 000 |
| Beispiel 15 | 70 | 30 | TEA | 4,2 | 99 | 0,5 | 28,7 | n.b. |
| Beispiel 16 | 70 | 30 | TEA | 3,2 | 99 | 1,3 | 30,8 | 72 000 |
| Beispiel 17 | 60 | 40 | TEA | 12,2 | 99 | 0,43 | 18,6 | 15 000 |
| Beispiel 18 | 50 | 50 | TEA | 11,7 | 99 | 1,8 | 14,3 | 8000 |
| Beispiel 19 | 50 | 50 | TEA | 5,5 | 99 | 1,0 | 14,1 | n.b. |
| Beispiel 20 | 50 | 50 | TEA | 2,9 | 99 | 3,8 | 15,6 | n.b. |
| Vergleichsbeispiel 6 | 75 | 25 | - | - | 110 | 4,1 | 30,6 | 93000 |
| Vergleichsbeispiel 7 | 70 | 30 | - | 0 | 99 | 9,8 | 28,4 | n.b. |
| Vergleichsbeispiel 8 | 70 | 30 | - | 0 | 135 | 1,8 | 15 | 12 000 |
| Vergleichsbeispiel9 | 50 | 50 | - | 0 | 99 | 15,9 | 13,8 | n.b. |
| Vergleichsbeispiel 10 | 50 | 50 | - | 0 | 130 | 1,2 | 10,8 | 3000 |
| Vergleichsbeispiel11 | 70 | 30 | TEA | 13,8 | 99 | 0.05 | 25,6 | n.b. |
| Vergleichsbeispiel 12 | 70 | 30 | NaOH | 29,8 | 115 | 0,05 | 60,2 | 70000 |

**Tabelle 3: Ergebnisse der Korrosionsschutzuntersuchungen**

| Eingesetztes Copolymer Nr. | AS [Gew.%] | MS [Gew. %] | Weitere Comonmere | | Base | Aquivalen zneutralis ationsgrad | Salzsprühtest | | | | | |
|---|---|---|---|---|---|---|---|---|---|---|---|---|
| | | | Art | Menge [Gew. %] | | | Alkalisch verzinktes Blech | | | Heißverzinktes Blech | | |
| | | | | | | [mol%] | Schichtdicke | 28h | 50h | Schichtdicke | 28h | 50h |
| Beispiel 1 | 75 | 25 | - | - | TEA | 6,8 | 2,2 | 9 | 7 | 1,6 | 3 | 1 |
| Beispiel 2 | 75 | 25 | - | - | DEA | 6,8 | 1,3 | 3 | 1 | 1,0 | 7 | 1 |
| Beispiel 3 | 75 | 25 | - | - | EA | 6,8 | 1,4 | 8 | 6 | 1,0 | 2 | 1 |
| Beispiel 5 | 65 | 35 | - | - | TEA | 6,8 | 1,4 | 7 | 4 | 1,3 | 4 | 1 |
| Beispiel 6 | 71 | 24 | Hydroxyethylacrylat | 5 | TEA | 6,8 | 2,3 | 6 | 2 | 1,7 | 5 | 2 |
| Beispiel 7 | 71 | 24 | Vinylphosphonsäure | 5 | TEA | 6,4 | 2,2 | 8 | 7 | 2,2 | 5 | 1 |
| Beispiel 8 | 68 | 23 | Vinylphosphonsäure | 9 | TEA | 9 | - | - | - | 1 | 10 | 1 |
| Beispiel 9 | 59,9 | 20,0 | Vinylphosphonsäure | 20,1 | DMEA | 20,1 | - | - | - | 1 | 10 | 8 |
| Beispiel 10 | 68 | 23 | Vinylphosphonsäure | 9 | TEA | 9 | - | - | - | 1 | 8 | 1 |
| Beispiel 11 | 59,9 | 20,0 | Vinylphosphonsäure | 20,1 | TEA | 20,1 | - | - | - | 1 | 10 | >8 |
| Vergleichsbeispiel 3 | 75 | 25 | - | - | TEA | 60 | 5,4 | 1 | 1 | 1,3 | 1 | 1 |
| Vergleichsbeispiel 4 | 75 | 25 | - | - | NaOH | 6,8 | 1,9 | 7 | 1 | 0,7 | 1 | 1 |

**Tabelle 4: Eingesetzte Formulierungen und Ergebnisse der Faserbindung.**

| Eingesetztes Copolymer Nr. | AS [Gew. %] | MS [Gew. %] | Aquivalenz-neutralisationsgrad im Zuge der Polymerisation [mol%] | Aquivalenz-Neutralisationsgrad der Formulierung [mol%] | pH-Wert | Biegsteifigkeit [mN] | Bemerkungen |
|---|---|---|---|---|---|---|---|
| Beispiel 12 | 75 | 25 | 13 | 13 | 3,1 | 320 | |
| Beispiel 13 | 70 | 30 | 12,7 | 13 | 3,0 | 325 | |
| Beispiel 14 | 70 | 30 | 8,5 | 13 | 3,1 | 340 | |
| Beispiel 15 | 70 | 30 | 4,2 | 13 | 3,1 | 336 | |
| Beispiel 16 | 70 | 30 | 3,2 | 13 | 3,0 | 329 | |
| - | - | - | - | - | - | 113 | Rohvlies ohne Polymer |
| Vergleichsbeispiel 6 | 75 | 25 | 0 | 13 | 3,0 | 303 | |
| Vergleichsbeispiel 7 | 70 | 30 | 0 | 13 | 2,8 | 258 | |
| Vergleichsbeispiel 8 | 70 | 30 | 0 | 13 | 2,7 | 290 | |
| Vergleichsbeispiel 11 | 70 | 30 | 13,8 | 33,3 | 4,3 | 294 | Zuviel Vernetzer |
| Vergleichsbeispiel 12 | 70 | 30 | 29,8 | 95 | 7,7 | 108 | NaOH als Base im Zuge der Polymerisation |

Die Beispiele und Vergleichsbeispiele zeigen, dass durch das erfindungsgemäße Verfahren carboxylatreiche Copolymere aus monoethylenisch ungesättigten Monocarbonsäuren und mindestens 20,1 % monoethylenisch ungesättigten Dicarbonsäuren erhalten werden, die trotz eines niedrigen Neutralisationsgrades einen niedrigen Restgehalt an unpolymerisierten Dicarbonsäuren aufweisen. Es lassen sich Copolymere mit einem sehr hohen Anteil von Dicarbonsäuren erhalten, welche dennoch ein vergleichsweise hohes Molekulargewicht aufweisen. Die erfindungsgemäß eingesetzten Amine wirken bei niedrigen Neutralisationsgraden erheblich besser als Natronlauge oder Ammoniak.

Anwendungstechnische Versuche mit den erfindungsgemäß erhaltenen Copolymeren zeigen, dass die Copolymere deutlich bessere Anwendunseigenschaften aufweisen.

Unter der Verwendung der Polymere erhaltene Passivierungsschichten haben eine erheblich bessere Korrosionsschutzwirkung als übliche Copolymere mit höherem Neutralisationsgrad.

Mittels der Copolymere hergestellte Bindemittelformulierungen zur Faserbindung verstärken Vliese deutlich besser als übliche Copolymere mit höherem Neutralisationsgrad.

## Patentansprüche

1. Verfahren zur Herstellung von carboxylatreichen Copolymeren aus monoethylenisch ungesättigten Mono- und Dicarbonsäuren mit einem mittleren Molekulargewicht M_{w} von mindestens 3000 g/mol durch radikalische Polymerisation in wässriger Lösung, wobei man die folgenden Monomere zur Polymerisation einsetzt:
(A) 30 bis 79,99 Gew. % mindestens einer monoethylenisch ungesättigten Monocarbonsäure,
(B) 20,01 bis 70 Gew. % mindestens einer monoethylenisch ungesättigten Dicarbonsäure der allgemeinen Formel
(HOOC)R¹C=CR²(COOH) (I),
und/oder
R¹R²C=C(-(CH₂)ₙ-COOH)(COOH) (II),
oder der entsprechenden Carbonsäureanhydride und/oder anderer hydrolysierbarer Derivate, wobei R¹ und R² unabhängig voneinander für H oder einen geradkettigen oder verzweigten, optional substituierten Alkylrest mit 1 bis 20 C-Atomen stehen, oder im Falle von (I) R¹ und R² gemeinsam für einen optional substituierten Alkylenrest mit 3 bis 20 C-Atome stehen, und n für eine ganze Zahl von 0 bis 5 steht,
sowie
(C) 0 bis 40 Gew. % mindestens eines weiteren -von (A) und (B) verschiedenen- ethylenisch ungesättigten Comonomers,
wobei die Mengen jeweils auf die Gesamtmenge aller eingesetzten Monomere bezogen ist,
**dadurch gekennzeichnet, dass** man die Polymerisation in Gegenwart von 3 bis 16 mol % mindestens eines Amins, bezogen auf die Gesamtmenge aller COOH-Gruppen der Mono- und Dicarbonsäuren, bei einer Temperatur von 80°C bis weniger als 130°C vornimmt.

2. Verfahren gemäß Anspruch 1, **dadurch gekennzeichnet, dass** die Menge des Amins 4 bis 14 mol % beträgt.

3. Verfahren gemäß Anspruch 1 oder 2, **dadurch gekennzeichnet dass** R¹ und R² für H und/oder Methyl stehen.

4. Verfahren gemäß einem der Ansprüche 1 bis 3, **dadurch gekennzeichnet, dass** es sich bei der Dicarbonsäure bzw. dem -anhydrid um Maleinsäure bzw. Maleinsäureanhydrid handelt.

5. Verfahren gemäß einem der Ansprüche 1 bis 4, **dadurch gekennzeichnet, dass** es sich bei der Monocarbonsäure um (Meth)acrylsäure handelt.

6. Verfahren gemäß einem der Ansprüche 1 bis 5, **dadurch gekennzeichnet, dass** es sich bei der Base um mindestens eine ausgewählt aus der Gruppe von Mono-, Di- oder Triethanolamin und/oder entsprechenden ethoxylierten Produkten handelt.

7. Verfahren gemäß einem der Ansprüche 1 bis 6, **dadurch gekennzeichnet, dass** die Temperatur bei der Polymerisation 90 bis 110°C beträgt.

8. Verfahren gemäß einem der Ansprüche 1 bis 7, **dadurch gekennzeichnet, dass** das carboxylatreiche Copolymer 5 bis 40 Gew. % Phosphonsäure- und/oder Phosphorsäuregruppen enthaltende Monomere (C) umfasst.

## Claims

1. A process for preparing a carboxylate-rich copolymer from monoethylenically unsaturated monocarboxylic and dicarboxylic acids having an average molecular weight M_{w} of at least 3000 g/mol by free-radical polymerization in aqueous solution of the following monomers:
(A) 30% to 79.99% by weight of at least one monoethylenically unsaturated monocarboxylic acid,
(B) 20.01% to 70% by weight of at least one monoethylenically unsaturated dicarboxylic acid of the general formula
(HOOC) R¹C=CR²(COOH) (I),
and/or
R¹R²C=C(-(CH2) n - COOH) (COOH) (II),
or of the corresponding carboxylic anhydrides and/or other hydrolyzable derivatives, R¹ and R² independently of one another being H or a straight-chain or branched, optionally substituted alkyl radical having 1 to 20 carbon atoms, or, in the case of (I), R¹ and R² together being an optionally substituted alkylene radical having 3 to 20 carbon atoms, and n being an integer from 0 to 5,
and
(C) 0% to 40% by weight of at least one further ethylenically unsaturated comonomer, different from (A) and (B),
the amounts being based in each case on the total amount of all monomers employed,
wherein the polymerization is performed in the presence of 3 to 16 mol% of at least one amine, based on the total amount of all COOH groups of the monocarboxylic and dicarboxylic acids, at a temperature of 80°C to less than 130°C.

2. The process according to claim 1, wherein the amount of the amine is 4 to 14 mol%.

3. The process according to claim 1 or 2, wherein R¹ and R² are H and/or methyl.

4. The process according to any one of claims 1 to 3,
wherein the dicarboxylic acid or anhydride is maleic acid or maleic anhydride.

5. The process according to any one of claims 1 to 4,
wherein the monocarboxylic acid is (meth)acrylic acid.

6. The process according to any one of claims 1 to 5,
wherein the base is at least one selected from the group of mono-, di- or triethanolamine and/or corresponding ethoxylated products.

7. The process according to any one of claims 1 to 6,
wherein the temperature during the polymerization is 90 to 110°C.

8. The process according to any one of claims 1 to 7,
wherein the carboxylate-rich copolymer comprises 5% to 40% by weight of monomers (C) comprising phosphonic acid and/or phosphoric acid groups.

## Revendications

1. Procédé pour la préparation de copolymères riches en carboxylate à partir d'acides monocarboxyliques et dicarboxyliques monoéthyléniquement insaturés avec un poids moléculaire moyen M_{w} d'au moins 3000 g/mole par polymérisation radicalaire en solution aqueuse, les monomères suivants étant mis en oeuvre pour la polymérisation :
(A) 30 à 79,99 % en poids d'au moins un acide monocarboxylique monoéthyléniquement insaturé,
(B) 20,01 à 70 % en poids d'au moins un acide dicarboxylique monoéthyléniquement insaturé de la formule générale :
(HOOC) R¹C=CR² (COOH) (I),
et/ou
R¹R²C=C(-(CH₂)ₙ-COOH) (COOH) (II),
ou des anhydrides carboxyliques correspondants et/ou d'autres dérivés hydrolysables, R¹ et R² représentant indépendamment l'un de l'autre de l'hydrogène ou un radical alkyle à chaîne droite ou ramifiée, optionnellement substitué avec 1 à 20 atomes de carbone, ou dans le cas de (I) R¹ et R² représentent ensemble un radical alkylène optionnellement substitué avec 3 à 20 atomes de carbone et n représente un nombre entier compris entre 0 et 5, de même que
(C) 0 à 40 % en poids d'au moins un autre comonomère éthyléniquement insaturé, différent de (A) et (B),
les quantités étant rapportées dans chaque cas à la quantité totale de tous les monomères mis en oeuvre,
**caractérisé en ce que** l'on exécute la polymérisation en présence de 3 à 16 % molaire d'au moins une amine, par rapport à la quantité totale de tous les groupes COOH des acides monocarboxyliques et dicarboxyliques, à une température de 80 °C à moins de 130 °C.

2. Procédé suivant la revendication 1, **caractérisé en ce que** la quantité de l'amine est de 4 à 14 % molaire.

3. Procédé suivant la revendication 1 ou 2,
**caractérisé en ce que** R¹ et R² représentent de l'hydrogène et/ou un méthyle.

4. Procédé suivant l'une des revendications 1 à 3, **caractérisé en ce que** l'acide dicarboxylique ou l'anhydride dicarboxylique est un acide maléique ou un anhydride maléique.

5. Procédé suivant l'une des revendications 1 à 4, **caractérisé en ce que** l'acide monocarboxylique est un acide (méth)acrylique.

6. Procédé suivant l'une des revendications 1 à 5, **caractérisé en ce que** la base est au moins sélectionnée parmi le groupe constitué de monoéthanolamine, de diéthanolamine ou de trzéthanolamine et/ou de produits éthoxylés correspondants.

7. Procédé suivant l'une des revendications 1 à 6, **caractérisé en ce que** la température de polymérisation est comprise entre 90 et 110°C.

8. Procédé suivant l'une des revendications 1 à 7, **caractérisé en ce que** le copolymère riche en carboxylate comprend des monomères (C) contenant 5 à 40 % en poids de groupes acide phosphonique et/ou acide phosphorique.
